# EUROPÄISCHE PATENTSCHRIFT

(11) **EP 2 260 140 B1**
(45) Veröffentlichungstag und Bekanntmachung des Hinweises auf die Patenterteilung: **06.12.2017**
(21) Anmeldenummer: 09722275.6
(22) Anmeldetag: 05.03.2009
(51) Int. Cl.: C08G 77/388, D06M 15/61, D06M 15/643, D06M 15/647, C08G 77/54, C08G 77/46

(54) **VERWENDUNG VON POLYAMINO- UND/ODER POLYAMMONIUM-POLYSILOXAN-COPOLYMER-VERBINDUNGEN**
USE OF POLYAMINO AND/OR POLYAMMONIUM POLYSILOXANE COPOLYMER COMPOUNDS
UTILISATION DE COMPOSÉS À BASE DE COMPOSÉS À BASE DE COPOLYMÈRES POLYAMINE- ET/OU POLYAMMONIUM-POLYSILOXANE

(30) Priorität: 18.03.2008 DE 102008014761
(43) Veröffentlichungstag der Anmeldung: 15.12.2010
(73) Patentinhaber: Momentive Performance Materials GmbH, 51368 Leverkusen (DE)
(72) Erfinder: WAGNER, Roland, 53227 Bonn (DE); SCHNERING, Albert, 51067 Köln (DE); SOCKEL, Karl-Heinz, 51373 Leverkusen (DE); MÖLLER, Annette, 51381 Leverkusen (DE); WITOSSEK, Anita, 40764 Langenfeld (DE); ROOS, Christopher, 40789 Monheim (DE); KROTT, Jürgen, 51371 Leverkusen (DE)
(74) Vertreter: Gille Hrabal
(86) Internationale Anmeldenummer: PCT/EP2009/052595
(87) Internationale Veröffentlichungsnummer: WO 2009/115412

(56) Entgegenhaltungen:
- WO-A-2004/041912
- WO-A-2004/042136
- DE-A1- 10 214 290

## Beschreibung

Die Erfindung betrifft die Verwendung von Polyamino-Polysiloxan-Copolymer-Verbindungen und/oder Polyammonium-Polysiloxan-Copolymer-Verbindungen oder wässrigen Emulsionen davon zur Erstausrüstung von faserartigen Materialien.

Aminogruppen enthaltende Polysiloxane sind als textile Weichmacher bekannt (EP 441 530).

Es ist weiterhin bekannt, α,ω-epoxymodifizierte Siloxane mit α,ω-amino-funktionalisierten Alkylenoxiden umzusetzen, und diese Produkte als hydrophile Weichmacher einzusetzen (US 5,807,956, US 5,981,681). In Weiterentwicklung diesen Gedankens sind Blockcopolymere vorgeschlagen worden, in denen α,ω-epoxymodifizierten Siloxane und α,ω-epoxymodifizierte Polyether über primäre Alkylamine als Kettenverlängerer miteinander verbunden werden.(US 6,475,568). Als Vorteile dieser Verbindungen werden eine höhere Weichheit und Fähigkeit zur Substratbenetzung genannt.
Aminosiloxane mit Ethylenoxid-/Propylenoxideinheiten in den Seitenketten sind ebenfalls beschrieben worden (US 5,591,880, US 5,650,529).

Eine gesteigerte Substantivität wird von Polysiloxanquats ("Polysiloxanquats" = quaternäre Ammoniumgruppen-enthaltende Polysiloxane) erwartet. Die Reaktion von α,ω-Diepoxiden mit tertiären Aminen in Gegenwart von Säuren ist bekannt, sie liefert α,ω-diquartäre Siloxane, welche zu Haarpflegezwecken eingesetzt werden können (DE-A 37 19 086). Neben tetraalkyl-substituierten quartären Ammoniumstrukturen werden auch aromatische Imidazoliniumderivate beansprucht.

Eine Verringerung der Auswaschbarkeit aus Haaren kann erzielt werden, wenn die α,ω-Diepoxide mit di-tertiären Aminen in Gegenwart von Säuren zu langkettigen polyquaternären Polysiloxanen umgesetzt werden (EP-A-282720). Aromatische quaternäre Ammoniumstrukturen werden nicht offenbart.

Derartige polyquaternäre Imidazoliniumderivate werden in US 6,240,929 behandelt. Diese kationischen Verbindungen sollen eine weiter erhöhte Kompatibilität gegenüber den in kosmetischen Formulierungen vorhandenen anionischen Tensiden besitzen. Allerdings bezieht sich die Auswaschbeständigkeit aus Haaren auf den kurzzeitigen Angriff von vornehmlich Wasser und sehr milden, die Haut nicht irritierenden Tensiden, während waschbeständige, hydrophile Weichmacher für Textilien dem Angriff konzentrierter Tensidlösungen mit hohem Fett- und Schmutzlösevermögen zu widerstehen haben. Erschwerend kommt hinzu, daß moderne Waschmittel stark alkalische Komplexbildner, oxidativ wirkende Bleichmittel und komplexe Enzymsysteme enthalten und die Fasern der Einwirkung oftmals über Stunden bei erhöhten Temperaturen ausgesetzt sind.

Durch Einführung von Alkylenoxidgruppen zusätzlich zu den quaternären Ammoniumstrukturen soll die Hydrophilie gesteigert werden.

Streng kammartige, d. h. in den Seitengruppen der Siloxaneinheiten alkylenoxidmodifizierte Polysiloxanquats sind ebenfalls beschrieben worden. Die Hydroxylgruppen von kammartig substituierten Polyethersiloxanen werden mit Epichlorhydrin (US 5,098,979) oder Chloressigsäure (US 5,153,294, US 5,166,297) in die entsprechenden Chlorderivate überführt. Anschließend erfolgt eine Quaternierung mit tertiären Aminen. Nachteil der Lösungen gemäß US 5,098,979, US 5,153,294 und US 5,166,297 ist, daß die Quatgruppen durch die Alkylenoxideinheiten weit von der Hauptkette beabstandet positioniert sind, wodurch die Substantivität des Gesamtmoleküls geschwächt wird.

Verzweigte alkylenoxid-modifizierte Polysiloxanquats sind aus α,ω-OH-terminierten Polysiloxanen und Trialkoxysilanen durch Kondensation synthetisiert worden. Die quartäre Ammoniumstruktur wird über das Silan eingebracht, wobei das quartäre Stickstoffatom durch Alkylenoxideinheiten substituiert ist (US 5,602,224). Nachteil dieser Lösung ist die wenig flexible Kopplung von Quatgehalt und Verzweigungsgrad.

In US 6,242,554 werden α,ω-difunktionelle Siloxanderivate beschrieben, die jeweils über eine separate quartäre Ammonium- und Alkylenoxideinheit verfügen. Diese monoquaternären Verbindungen sich allerdings nicht hinreichend substantiv.

In den WO 02/10257 und WO 02/10259 werden polyquaternäre Polysiloxanblockcopolymere als fortschrittliche Weichmacher beansprucht, die ein Weichmachen von Textilien während der Ausrüstung und auch alternativ während des Waschprozesses aus Detergenzienformulierungen heraus ermöglichen. Die US 2002/0103094 A behandelt die Verwendung der genannten Siliconmaterialien in Textilpflegeformulierungen. Die WO 02/10257, WO 02/10259 und US 2002/0103094 A offenbaren Materialien, in denen die Quatgruppen anteilig oder vollständig separiert von den Alkylenoxideinheiten vorliegen. Diese Alkylenoxideinheiten werden als α,ω-difunktionelle Einheiten in das Blockcopolymer eingebaut.

In WO 03/78504 werden verzweigte polyquaternäre Polysiloxanblock-copolymere als permanente Textilweichmacher beschrieben. Als verzweigende Einheit können u.a. trifunktionelle Alkylenoxidstrukturen eingebaut werden, die von den Quatgruppen separiert vorliegen. Bedingt durch ihren Vernetztercharakter können diese trifunktionellen Alkylenoxide nur in begrenztem Umfang eingeführt werden.

Reaktiv funktionalisierte verzweigte polyquaternäre Polysiloxanblock-copolymere als permanente Textilweichmacher werden in WO 2004/090007 beschrieben.

Polyquaternäre Polysiloxanblock-copolymere mit Polyetherseitengruppen werden in WO 2006/103075 als permanente Textilweichmacher beschrieben.

Octopusartige polyquaternäre Polysiloxanblock-copolymere als permanente Textilweichmacher werden in WO 2007/014930 beschrieben.

WO 2004/041912 und WO 2004/042136 betreffen lineare Polyamino- und/oder Polyammonium-Polysiloxancopolymere und deren Verwendung in kosmetischen Formulierungen, in Waschmitteln oder zur Oberflächenbehandlung von Substraten. DE 102 14 290 A1 betrifft die Verwendung von Silikonquats in kosmetischen Formulierungen zur Behandlung keratinhaltiger Substrate.

Ausgehend von diesem Stand der Technik ist eine weitere Verbesserung der Hydrophilie der siliconbasierten Blockcopolymeren ohne Preisgabe der erreichbaren Weichheit der behandelten Fasern, insbesondere bei gleichbleibender oder verbesserter Substantivität (Haftung der Siloxansysteme/moleküle auf der Faser), der Flexibilität bei der Formulierung der Siloxansysteme/zusammensetzungen und der Darreichungsform insbesondere in Richtung auf eine Verringerung der notwendigen Einsatzmengen und der Materialkosten sehr wünschenswert.

Es ist somit eine Aufgabe der Erfindung die Verwendung polyquaternierter Siloxan-blockcopolymere zur Erstausrüstung von Textilien und anderen natürlichen und synthetischen faserartigen Materialien wie z.B. Papierfasern, Wolle und Haare bereitzustellen, womit derartigen Materialien bzw. Substraten, bevorzugt Textilmaterialien, eine silicontypische Weichheit, eine verbesserte Elastizität und verringerte Knitterneigung bei gesteigerter Hydrophilie verliehen wird.

Es ist eine weitere Aufgabe der Erfindung, eine neue Verwendung der erfindungsgemäßen Substanzen als Bestandteil von Systemen zur textilen Erstausrüstung oder Ausrüstung anderer faserartiger Substrate bereitzustellen.

Es wurde überraschend gefunden, dass die vorstehend beschriebenen Aufgabenstellungen gelöst werden können durch die Verwendung von Polyamino-Polysiloxan-Copolymer-Verbindungen und/oder Polyammonium-Polysiloxan-Copolymer-Verbindungen wie in den Ansprüchen definiert
zur Erstausrüstung von Fasermaterialien.

Die Gruppe R in der Definition von Q wird bevorzugt ausgewählt aus den Gruppen R².

Bevorzugte Ausführungsformen von Q sind:
Für Reste der Formel 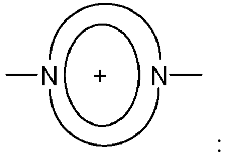
eine quaternierte Imidazoleinheit der Struktur 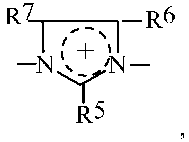
eine quaternierte Pyrazoleinheit der Struktur 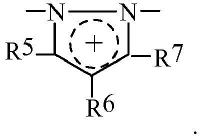
Für Reste der Formel 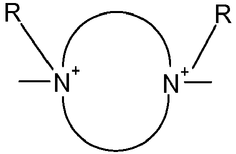
eine zweifach quaternierte Piperazineinheit der Struktur 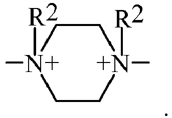
Für Reste der Formel 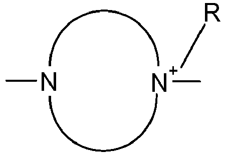
eine monoquaternierte Piperazineinheit der Struktur 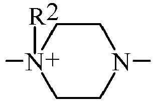 und
eine monoquaternierte Piperazineinheit der Struktur 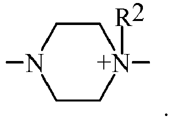
Für Reste der Formel

   -N⁺R₂-

   ein Rest der Formel -N'R₂-, worin R einen einwertigen, geradkettigen, cyclischen oder verzweigten, gesättigten Kohlenwasserstoffrest mit bis zu 20 Kohlenstoffatomen darstellt, der eine oder mehrere Gruppen ausgewählt aus

   -O-,

   -NH-,

   -C(O)-

   und

   -C(S)-

   enthalten kann, und der gegebenenfalls durch eine oder mehrere Hydroxylgruppen substituiert sein kann, und
eine zweifach quaternierte Einheit der Struktur 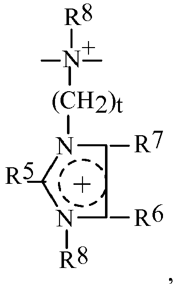
eine monoquaternierte Einheit der Struktur 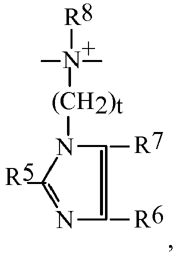
eine zweifach quaternierte Einheit der Struktur 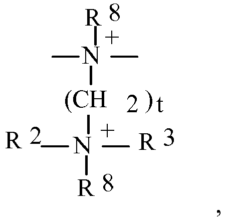
und eine monoquaternierte Einheit der Struktur 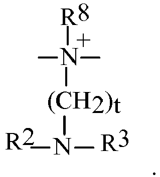
Für Reste der Formel

   -NR-
eine monoquaternierte Einheit der Struktur 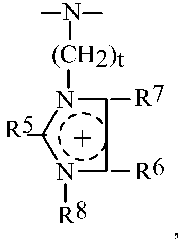
eine monoquaternierte Einheit der Struktur 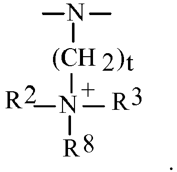 worin:
   t von 2 bis 10 ist,
   R wie oben definiert, bevorzugt R² ist, R² wie oben definiert ist, und die Bedeutung von R² von der Bedeutung der obigen Gruppe R² gleich oder verschieden sein kann,
   R³ die Bedeutung von R² aufweist, wobei R² und R³ gleich oder verschieden sein können, oder
   R² und R³ gemeinsam mit dem positiv geladenen Stickstoffatom einen fünf- bis siebengliedrigen Heterocyclus bilden können, der gegebenenfalls zusätzlich ein oder mehrere Stickstoff-, Sauerstoff- und/oder Schwefelatome aufweisen kann,
   R⁵, R⁶, R⁷ gleich oder verschieden sein können und aus der Gruppe ausgewählt werden, die besteht aus: H, Halogen, Hydroxylgruppe, Nitrogruppe, Cyanogruppe, Thiolgruppe, Carboxylgruppe, Alkylgruppe, Monohydroxyalkylgruppe, Polyhydroxyalkylgruppe, Thioalkylgruppe, Cyanoalkylgruppe, Alkoxygruppe, Acylgruppe, Acetyloxygruppe, Cycloalkylgruppe, Arylgruppe, Alkylarylgruppe, und Gruppen des Typs -NHR^{W}, in denen R^{W} H, Alkylgruppe, Monohydroxyalkylgruppe, Polyhydroxyalkylgruppe, Acetylgruppe oder eine Ureidogruppe bedeuten, und jeweils zwei der benachbarten Reste R⁵, R⁶ und R⁷ mit den sie an den Heterocyclus bindenden Kohlenstoffatomen aromatische Fünfbis Siebenringe bilden können, und
   R⁸ die Bedeutung von R² aufweist, wobei R⁸ und R² gleich oder verschieden sein können.

Im Falle, dass Q einen dreiwertigen Rest der Formeln 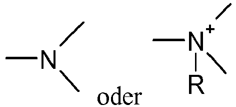 oder eine vierwertigen Rest 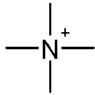 darstellt, dienen diese Reste bei den linearen Copolymeren der Formel (I) bevorzugt nicht der Verzweigung der Polysiloxan-Copolymere sondern diese Reste sind ausschließlich mit insbesondere dreiwertigen Resten V³ verbunden, wobei cyclische Strukturen ausgebildet werden, die Bestandteil der linearen Hauptkette sind, wie z.B. ein Strukturelement der Formel:

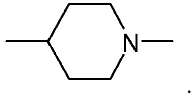

In einer bevorzugten Ausführungsform der Erfindung weisen die Polyamino- und/oder Polyammonium-Polysiloxan-Copolymer-Verbindungen die Formel (II) auf: 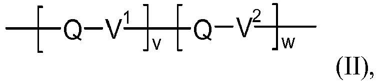
worin Q und V² wie zuvor definiert sind,
V¹ ausgewählt wird aus mindestens einer Gruppe V¹¹ und mindestens einer Gruppe V¹², und das Verhältnis von w zu v von 0,05 bis 10 beträgt.
Bevorzugter beträgt das Verhältnis von w zu v = 0,1 bis 5 noch bevorzugter 0,3 bis 2.

Durch Einstellen des Verhältnisses der Gruppe V², welche den vergleichsweise langkettigen Polydiorganosiloxanrest aufweist, und der Gruppe V¹, welche keinen langkettigen Polydiorganosiloxanrest aufweist, lässt sich in Kombination mit der Einstellung der Kettenlänge des Polydiorganosiloxanrestes die mit der erfindungsgemäßen textilen Erstausrüstung erreichte die Hydrophilie, Weichheit und Griff der faserartigen Materialien im Sinne einer hervorragenden Balance optimieren.

Zusätzlich kann eine weitere Optimierung im Hinblick auf die textile Erstausrüstung durch die Verwendung polyalkylenoxid-haltiger Reste V¹¹ und nicht-polyalkylenoxid-haltiger Resten V¹² erfolgen Bei Verwendung besagter Reste V¹¹ und V¹² ergeben sich insbesondere Polyamino- und/oder Polyammonium-Polysiloxan-Copolymer-Verbindungen der Formel (III): 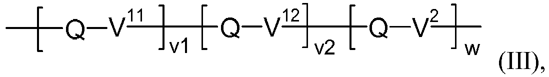 worin Q, V¹¹, V¹² und V² wie oben definiert sind, und v1 + v2 = v ist. Das molare Verhältnis von v1 zu v2 in mol-% kann zwischen 0 bis 100 liegen (> 0 und < 100), bezogen auf die Gesamtmenge v1 und v2. Bevorzugt liegt das molare Verhältnis von v1 zu v2 in mol-% im Bereich von 5 bis 95 mol-%. Ist das Molverhältnis von v1/v2 in < 5 %, so kann die Hydrophilie der erfindungsgemäß verwendeten Polyamino- und/oder Polyammonium-Polysiloxan-Copolymer-Verbindungen verringert sein. Ist das Molverhältnis von v1/v2 > 95 %, so kann die Hydrophilie der erfindungsgemäß verwendeten Polyamino- und/oder Polyammonium-Polysiloxan-Copolymer-Verbindungen hoch sein, wobei jedoch die Gefahr einer Verringerung der Substantivität besteht und der Weichgriff verschlechtert wird.

Die Erfinder der vorliegenden Erfindung fanden des weiteren, dass dem Verhältnis von V² zu V¹¹ entsprechend w zu v1 in mol-% eine besondere Bedeutung bei der textilen Erstausrüstung zukommt. Bevorzugt beträgt das molare Verhältnis der Gruppen V² zu V¹¹ entsprechend w zu v1 in mol-% von 50 bis 99,9, bevorzugter 80 bis 99 noch bevorzugter 85 bis 97, jeweils mol-% bezogen auf die Summe von w und v1.
Die erfindungsgemäß verwendeten Polyamino- und/oder Polyammonium-Polysiloxan-Copolymer-Verbindungen weisen im allgemeinen im Mittel mindestens zwei, bevorzugter mindestens drei Wiederholungseinheiten der Formel (I) auf.

In einer bevorzugten Ausführungsform der Polysiloxanverbindungen der Formel (I) stellt V² eine Gruppe der Formel

-V²*-Z²-V²*-

dar, worin Z² wie oben definiert ist und V²* einen zweiwertigen geradkettigen, cyclischen oder verzweigten, gesättigten, ungesättigten oder aromatischen Kohlenwasserstoffrest mit bis zu 40 Kohlenstoffatomen darstellt, der gegebenenfalls eine oder mehrere Gruppen, ausgewählt aus -O-, -CONH-, -CONR²-, worin R² wie oben definiert ist, -C(O)- und -C(S)- enthalten kann, und der Rest V²* gegebenenfalls durch eine oder mehrere Hydroxylgruppen substituiert sein kann.

In der vorstehend erwähnten Ausführungsform kann das erfindungsgemäße verwendete, bevorzugt lineare Polysiloxancopolymer die folgenden Wiederholungseinheiten aufweisen:

-[V²*-Z²-V²*-Q]-

bevorzugt zusammen mit -[V¹-Q]-.

In einer weiteren bevorzugten Ausführungsform der Polysiloxan-Verbindungen der Formel (I) wird die Gruppe Q ausgewählt aus: 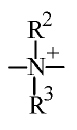 worin R² wie oben definiert ist, bevorzugt H oder Alkyl, bevorzugt mit 1 bis 6 Kohlenstoffatomen, ist und R³ die Bedeutung von R² besitzt und bevorzugt H, Alkyl, bevorzugt mit 1 bis 6 Kohlenstoffatomen, oder R^{O} ist, worin der Rest R^{O} eine Gruppe der Formel (IV) darstellt:

-X-E-Y (IV),

worin X eine Einfachbindung oder einen zweiwertigen, geradkettigen, verzweigten oder cyclischen Kohlenwasserstoffrest mit bis zu 20 Kohlenstoffatomen darstellt, der gegebenenfalls Stickstoff und/oder Sauerstoff enthalten kann, und X über ein Kohlenstoffatom mit dem Stickstoffatom von Q verbunden ist,
E einen Polyalkylenoxidrest der Formel

   -[(CₐH₂ₐ)O]_{y}-

   worin a = 2 bis 4 ist, und
   y = 2 bis 10000 ist, bevorzugt ist y= 1-2,
   der über ein Kohlenstoffatom mit der Gruppe X und über ein Sauerstoffatom mit der Gruppe Y verbunden ist,
Y Wasserstoff oder einen einwertigen, geradkettigen, verzweigten oder cyclischen, gesättigten, ungesättigen oder aromatischen Kohlenwasserstoffrest mit bis zu 24 Kohlenstoffatomen darstellt, der Sauerstoff und/oder Stickstoff und/oder Halogen enthalten kann und über ein Kohlenstoffatom mit der Gruppe E verbunden ist.

Bevorzugt ist R^{O} eine Gruppe der Formel (III), in der -E- eine Gruppe der Formel (V) darstellt: 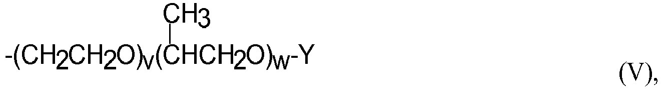 wobei es sich um statistische und blockartige Sequenzen der Ethylen- und Propylenoxid-Einheiten handeln kann und die Bindung an E über eine Ethylen- oder Propylenoxid-Einheit erfolgen kann, die Darstellung der Gruppe (V) mithin nur quantitativ ist, mit
v = 1 bis 200, bevorzugt 1-2,
w = 0 bis 200, bevorzugt =0,
v+w ≥ 1.

In der Gruppe der Formel (IV) wird weiterhin Y bevorzugt aus H oder geradkettigen, cyclischen, verzweigten C₁ bis C₂₂-Alkyl-, Alkenyl-, Alkinyl-, Fluor(C₁-C₁₀)alkyl- und C₆₋C₁₀-Arylresten ausgewählt.

Besonders bevorzugt steht 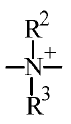 für -NH2⁺-, -N(CH3)2⁺-, -(NHR^{O})⁺-,

V²* steht bevorzugt für einen zweiwertigen geradkettigen, cyclischen oder verzweigten, gesättigten, ungesättigten oder aromatischen Kohlenwasserstoffrest mit bis zu 16 Kohlenstoffatomen, der eine oder mehrere Gruppen, ausgewählt aus -O-, -CONH-, -CONR²-, worin R² wie oben definiert ist,, -C(O)-, -C(S)- enthalten kann und mit einer oder mehreren Hydroxylgruppen substituiert sein kann. Noch bevorzugter wird -V²*- ausgewählt aus Gruppen der Formeln:

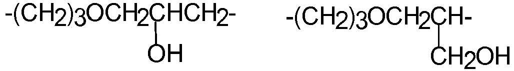

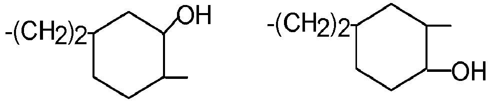

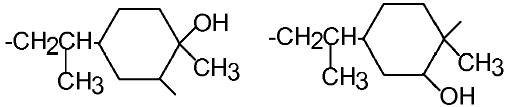

Die erfindungsgemäßen Polyamino- und/oder Polyammonium-Polysiloxan-Copolymer-Verbindungen enthalten mindestens eine (poly)alkylenoxid-freie Einheit V¹² und mindestens eine (poly)alkylenoxid-haltige Einheit V¹¹.

Der Ausdruck (poly)alkylenoxid-haltig bedeutet, dass der Rest V¹¹ wenigstens eine Alkylenethergruppe oder Poly(alkylenether)-Gruppe enthält. Die Alkylethergruppe kann dabei auch Teil einer Estergruppe sein, wie zum Beispiel in der Gruppe der Formel:
-(CH₂)ᵤC(O)O-R⁹-O-C(O)(CH₂)ᵤ-, wo die Alkylethergruppe durch die Gruppe -R⁹-O- oder -O-R⁹- gebildet wird.
Umgekehrt bedeutet der Ausdruck (poly)alkylenoxid-frei bedeutet, dass der Rest V¹² keine Alkylenethergruppe oder Poly(alkylenether)-Gruppe enthält.

V¹² wird daher bevorzugt ausgewählt aus zweiwertigen, geradkettigen, cyclischen oder verzweigten, gesättigten, ungesättigten oder aromatischen Kohlenwasserstoffresten mit bis zu 100 Kohlenstoffatomen, die gegebenenfalls eine oder mehrere Gruppen, ausgewählt aus
-Z¹- enthalten können, worin
   -Z¹- eine Gruppe der Formel 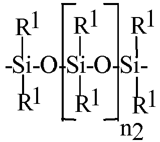 ist, worin
   R¹ wie oben definiert ist, wobei die Gruppen R¹ in den Gruppen V¹² und V² gleich oder verschieden sein können, und
   n₂ = 0 bis 19 bedeutet, und
   der Rest V¹² gegebenenfalls durch eine oder mehrere Hydroxylgruppen und/oder durch

   -Si(OR)₃₋ₐ(R')ₐ

   substituiert sein kann, worin a eine ganze Zahl von 0 bis 2 ist und R und R' gleich oder verschieden voneinander sein können und jeweils einen organischen Rest darstellen.

V¹² steht noch bevorzugter für
▪ -R⁹-, worin R⁹ einen zweiwertigen, gesättigten oder einfach oder mehrfach ungesättigten, geradkettigen oder verzweigten Kohlenwasserstoffrest mit zwei bis 25 Kohlenstoffatomen darstellt,
V¹¹ steht bevorzugt für
▪

   -(CH₂)ᵤC(O)O-[(CH₂CH₂O)_{q}-(CH₂CH(CH₃)O)ᵣ]-C(O)(CH₂)ᵤ-
▪

   -(CH₂)ᵤC(O)O-R⁹-O-C(O)(CH₂)ᵤ-,

   worin R⁹ wie zuvor definiert ist,
▪

   -[CH₂CH₂O]_{q}-[CH₂CH(CH₃)O]ᵣ-CH₂CH₂-,
▪

   -CH(CH₃)CH₂O[CH₂CH₂O]_{q}-[CH₂CH(CH₃)O]ᵣ-CH₂CH(CH₃),
▪

   -CH₂CH(OH)CH₂OCH₂CH(OH)CH₂OCH₂CH(OH)CH₂-

   und
▪

   CH₂CH(OH)CH₂O-[CH₂CH₂O]_{q}-[CH₂CH(CH₃)O]ᵣ-CH₂CH(OH)CH₂-

   worin
   u von 1 bis 3 ist,
   q und r von 0 bis 5, bevorzugt von 0 bis 3, und
   q + r > 0 ist.

Bevorzugtere Varianten von V¹¹ sind Strukturen der Formel:

-CH₂C(O)O-[CH₂CH₂O]_{q}-[CH₂CH(CH₃)O]ᵣ-C(O)CH₂-,

-CH₂CH₂C(O)O-[CH₂CH₂O]_{q}-[CH₂CH(CH₃)O]ᵣ-C(O)CH₂CH₂-,

-CH₂CH₂CH₂C(O)O-[CH₂CH₂O]_{q}-[CH₂CH(CH₃)O]ᵣ-C(O)CH₂CH₂CH₂-,

Noch bevorzugtere Varianten von V¹¹ sind Strukturen der Formel:

-CH₂C(O)O-[CH₂CH₂O]_{q}-[CH₂CH(CH₃)O]ᵣ-C(O)CH₂-,

worin r = 0 ist und q = 1 bis 3, bevorzugt 1 oder 2 und am meisten bevorzugt 2 ist.
V¹² ist bevorzugt:

-[CH₂]ₒ-

mit o = 2 bis 8, bevorzugter o = 2 bis 6, am meisten bevorzugt = 6.

Besonders bevorzugt werden erfindungsgemäß Polyamino- und/oder Polyammonium-Polysiloxan-Copolymer-Verbindungen der Formel (III) verwendet: 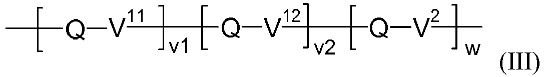 worin mindestens eines, bevorzugt mindestens zwei, noch bevorzugter alle der folgenden Merkmale erfüllt sind:
v1 > 0,
v2 > 0,
w > 0,
w : v (= v1 + v2), entsprechend dem molaren Verhältnis von V² zu V¹ von 0,3 bis 2,
molares Verhältnis von v1 zu v2 in mol-% von 5 bis 95 mol-%,
molares Verhältnis von V² zu V¹¹ entsprechend w zu v1 in mol-% von 80 bis 99 noch bevorzugter 85 bis 97, jeweils bezogen auf die Summe von w und v1, d.h. also ein molares Verhältnis w : v1 wie 80 bis 99 : 20 bis 1, noch bevorzugter 85 bis 97 : 15 bis 3
V¹¹ ist bevorzugt eine Gruppe der Formel -CH₂C(O)O-[CH₂CH₂O]_{q}-C(O)CH₂-, worin q 1 oder 2 ist,
V¹² ist eine Gruppe der Formel -[CH₂]ₒ-, worin o = 2 bis 6, bevorzugter o = 6 ist,
V² ist eine Gruppe V²*-Z²-V²*- mit V²* = 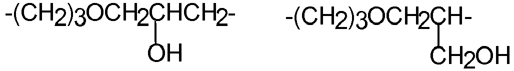 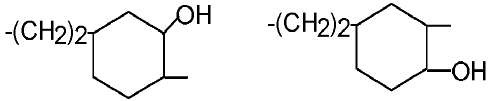 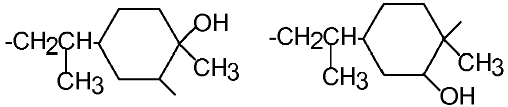 oder
V²* = zweiwertiger gesättigter Kohlenwasserstoffrest mit 1 bis 10 Kohlenstoffatomen darstellt, und
-Z²- einen Rest der Formel 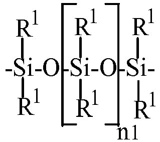 darstellt, worin
   R¹ C₁ bis C₂₂-Alkyl, bevorzugt Methyl ist, und
   n₁ = 22 bis 50, noch bevorzugter 24 bis 48 bedeutet.

Die erfindungsgemäß verwendeten Polyamino- und/oder Polyammonium-Polysiloxan-Copolymer-Verbindungen können insbesondere durch ein Verfahren hergestellt werden, in dem Diamine mit aminreaktiven Verbindungen, wie epoxy- und/oder Halogenalkyl-funktionelle Verbindungen umgesetzt werden, wobei die umgesetzten Verbindungen mindestens einen (Poly)alkylenoxid-Rest, mindestens einen Polydiorganosiloxan-Rest und mindestens einen Rest, der zur Bildung eines Rest V¹², der keinen (Poly)alkylenoxid-Rest enthält, führt.

Bei den erfindungsgemäß verwendeten Polysiloxan-Copolymer-Verbindungen kann es sich um solche handeln, die Aminofunktionen aufweisen und es kann sich um solche handeln, die Ammoniumfunktionen aufweisen. Bevorzugt handelt es sich bei den erfindungsgemäß verwendeten Polysiloxan-Copolymer-Verbindungen um Polyammonium-Polysiloxan-Copolymer-Verbindungen. Diese werden vorzugsweise durch quaternisierende Umsetzung di-tertiärer Diamine mit quaternisierenden bzw. alkylierenden Verbindungen, wie insbesondere Epoxy- und/oder Halogenalkyl-funktionellen Verbindungen erhalten.

Als die aus den Ammoniumgruppen resultierenden positiven Ladungen neutralisierende Anionen können beispielsweise vorhanden sein: Halogenidionen, speziell Chlorid und Bromid, Alkylsulfate, speziell Methosulfat, Carboxylate, speziell Acetat, Propionat, Octanoat, Decanoat, Dodecanoat, Tetradecanoat, Hexadecanoat, Octadecanoat, Oleat, Sulfonate, speziell Toluensulfonat. Als nicht neutralisierendes Anion für die quaternierten Verbindungen kommt auch das OH⁻-Anion in Betracht. Durch Ionenaustausch können auch andere Anionen eingeführt werden. Zu nennen sind beispielsweise organische Anionen, wie Polyethercarboxylate und Polyethersulfate.

Bevorzugt handelt es sich bei den erfindungsgemäß verwendeten Polyammonium-Polysil-oxan-Copolymer-Verbindungen um solche, die beispielsweise durch ein Verfahren hergestellt werden, worin
a) Ein Diamin, welches eine (Poly)alkylenoxidgruppe enthält, sowie ein Diamin, das keine (Poly)alkylenoxidgruppe enthält, mit amino-reaktiven Polysiloxan-enthaltenden Verbindungen umgesetzt werden, und
b) Ein Diamin, welches keine (Poly)alkylenoxidgruppe enthält, mit einer amino-reaktiven Polysiloxan-enthaltenden Verbindung und einer amino-reaktiven (Poly)alkylenoxid-Verbindung umgesetzt werden.

Durch geeignete Auswahl der Stöchiometrie der Ausgangsverbindungen lässt sich das Verhältnis der Gruppen V¹¹, V¹² und V² in den erfindungsgemäßen Verbindungen steuern.

Geeignete V¹¹ bzw. V¹² einführende Monomere sind beispielsweise alpha, omega-Diamine, wie Alkylendiamine oder Diaminopolyether. Diese werden beispielsweise mit amino-reaktiven V²-enthaltenden Monomeren umgesetzt, wie beispielsweise Diepoxy-Polysiloxan-Verbindungen, Dihalogenalkyl-Polysiloxanverbindungen.

Alternativ können V¹¹ oder V¹² auch über Dihalogenalkyl-Verbindungen, Diepoxid-Verbindungen oder Verbindungen mit gemischten Gruppen eingeführt werden, die mit aminofunktionellen Monomeren umgesetzt werden, die die Gruppe V² oder weitere Gruppen V¹¹ oder V¹² einführen.

Zur Herstellung kann beispielsweise auf die WO 02/10257 verwiesen werden.

Die erfindungsgemäß verwendeten Polysiloxane der allgemeinen Formel (I) können gegebenenfalls auch Verzweigungseinheiten V³ enthalten. Dabei handelt es sich zweckmäßig um V³ einen drei- oder höherwertigen, geradkettigen, cyclischen oder verzweigten, gesättigten, ungesättigten oder aromatischen Kohlenwasserstoffrest mit bis zu 1000 Kohlenstoffatomen darstellt, der gegebenenfalls eine oder mehrere Gruppen, ausgewählt aus -O-, -CONH-,-CONR²-, worin R² wie oben definiert ist, -C(O)-, -C(S)-, -Z¹-, das wie oben definiert ist, -Z²- das wie oben definiert ist, und Z³, worin Z³ eine drei- oder höherwertige Organopolysiloxaneinheit ist, enthalten kann. Die Verzweigungseinheit V³ kann silikonfrei sein. Beispiele hiervon schließen ein: 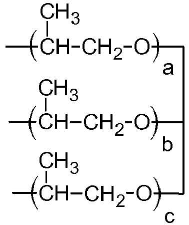 worin a, b und c gleich oder verschieden und von 1 bis 40 sein können, 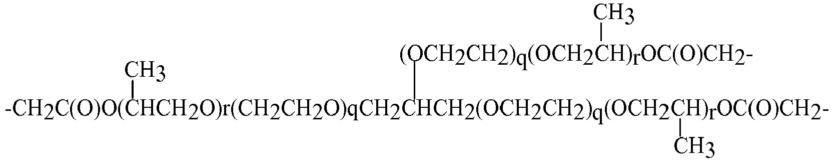 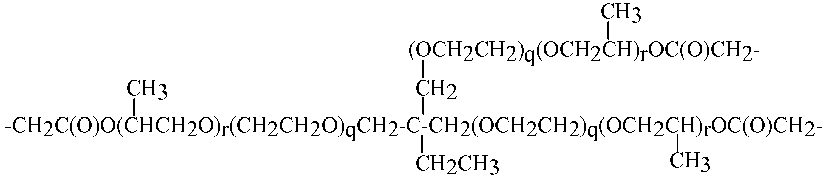 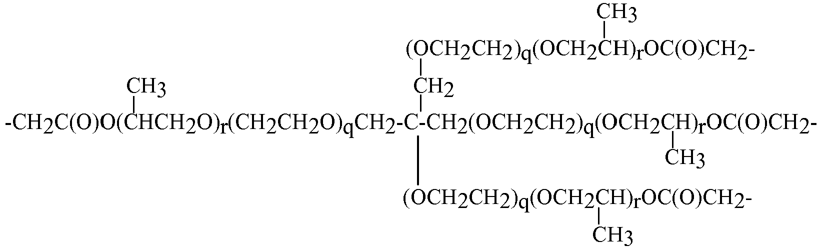 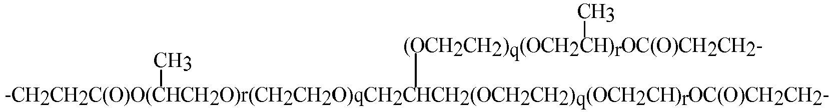 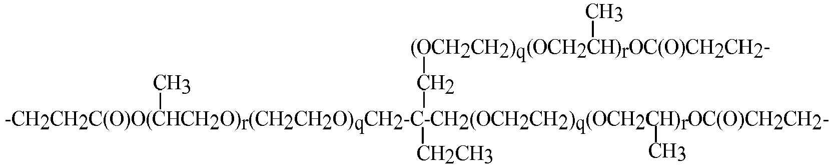 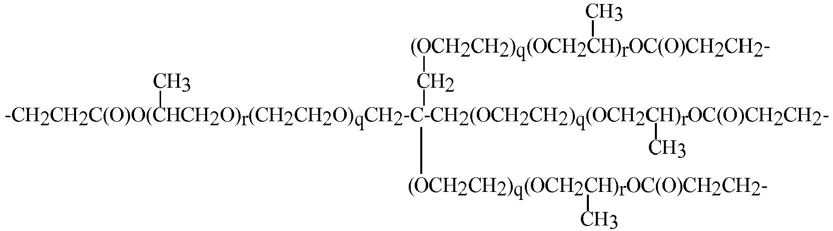 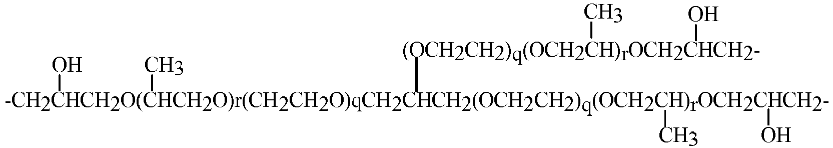 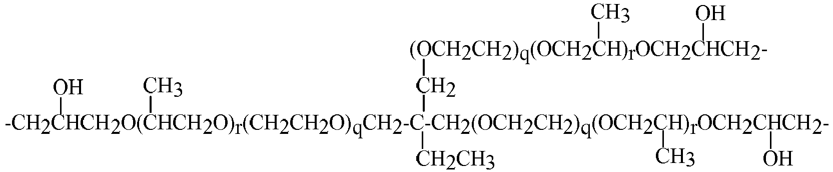 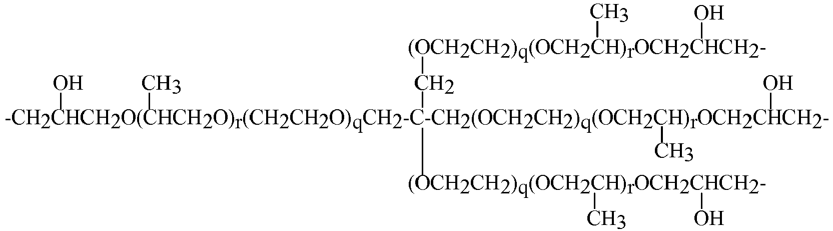 q+r ≥ 0, wobei die Anordnung der Ethylen- und Propylenoxid-Einheiten statistisch oder blockartig sein kann und die Anbindung an Q über Ethylen- und Propylenoxid-Einheiten via ein Kohlenstoffatom erfolgen kann.

Die Verzweigungseinheit V³ kann eine drei- oder höherwertige Organopolysiloxaneinheit enthalten, wie zum Beispiel: 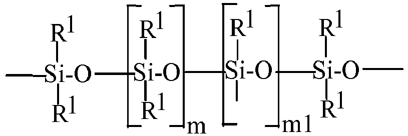 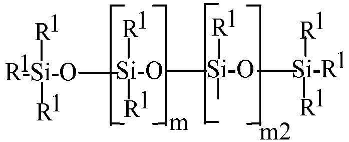 worin R¹ wie oben definiert ist, m = 0 bis 1000, bevorzugt 0 bis 50 und m¹ ≥ 1 und m² ≥ 3 ist, 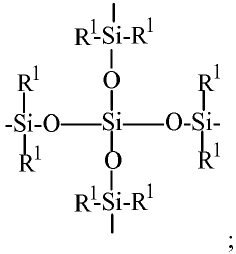 und 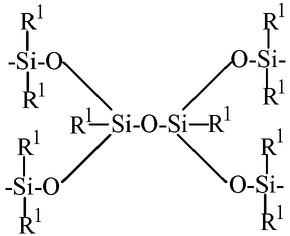 worin R¹ jeweils wie oben definiert ist.

Ein Beispiel einer Z³-enthaltenden Verzweigungseinheit V³ ist zum Beispiel:

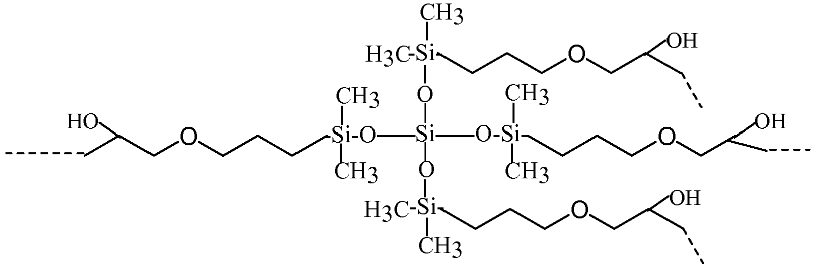

Die erfindungsgemäß verwendeten Polysiloxane können Einheiten R^{O} enthalten, die bevorzugt durch geeignete Alkylierungsreaktionen von primär, sekundär oder tertiär monoamino-funktionalisierten Polyalkylenoxiden mit reaktiv funktionali-sierten Siloxanvorstufen in das Polymer eingebunden werden. Bevorzugt werden die monoprimär funktionalisierten Jeffamine® der M-Serie (Huntsman Corp.) eingesetzt.

Monofunktionell angebundene hydrophile Elemente R^{O} können in die erfindungsgemäß verwendeten Polysiloxancopolymere eingeführt werden, um gezielt die Hydrophilie zu steigern.

Dies führt sowohl zu einer gesteigerten Hydrophilie der erfindungsgemäß verwendeten Polysiloxancopolymere selbst, so dass beispielsweise stabilere Emulsionen in Wasser entstehen, als auch zu einer Erhöhung der Hydrophilie der mit den erfindungsgemäß verwendeten Polysiloxancopolymere behandelten Substrate, was beispielsweise zu einer verbesserten Feuchtigkeitsaufnahme führt.

Es liegt weiterhin im Rahmen der Erfindung, reaktive Einheiten in die Copolymerhauptkette einzuführen. Solche reaktive Gruppen schließen Gruppen der folgenden Formeln ein: 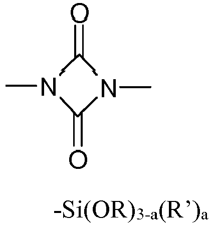 und worin 'a' eine ganze Zahl von 0 bis 2 ist und R und R' gleich oder verschieden voneinander sein können und jeweils einen organischen Rest darstellen. Die genannten reaktiven Gruppen können erfindungsgemäß über V oder Q entsprechenden Einheiten eingeführt werden, wie in der PCT/EP 2004/050472 näher beschrieben.

Die erfindungsgemäß verwendeten Polyamino- und/oder Polyammonium-Polysiloxan-Copolymer-Verbindungen können bei 25 °C fest oder flüssig sein. Für den Fall, dass sie bei 25 °C flüssig sind, liegen die Viskositäten der genannten Polysiloxane bevorzugt zwischen 500 bis 50.000.000 mPa.s bei 25 °C, bevorzugt 1000 bis 2.500.000 mPa.s bei 25 °C und bei einem Schergeschwindigkeitsgefälle von D= 1 s⁻¹.

Die Erfindung betrifft weiterhin die Verwendung wässriger Emulsionen, die mindestens eine Polyamino-Polysiloxan-Copolymer-Verbindungen und/oder Polyammonium-Polysiloxan-Copolymer-Verbindungen wie vorstehend definiert enthalten, zur Erstausrüstung von Fasermaterialien. Derartige wässrige Emulsionen werden hergestellt durch Dispergieren der Polyamino-Polysiloxan-Copolymer-Verbindungen und/oder Polyammonium-Polysiloxan-Copolymer-Verbindungen oder gegebenenfalls alkoholischen Lösungen in Wasser mit üblichen Emulgierapparaturen, wie Rotor-Stator-Mischer, einfache Rührer und Mischdüsen und Gaulin-Emulgiermaschinen, gegebenenfalls in Anwesenheit eines oder mehrerer oberflächenaktiven Mitteln. Bevorzugt werden zunächst Konzentrate hergestellt, welche dann auf die bevorzugten Anwendungskonzentrationen verdünnt werden. Konzentrationbereiche der Konzentrate liegen beispielsweise bei:

| **Bestandteil** | **Konzentrationen** |
|---|---|
| Polyamino- und/oder Poly-ammonium-Polysiloxan-Copolymer- Verbindungen | 10 bis 40 Gew.-% |
| Emulgatoren | 0,5 bis 20 Gew.-% |
| Wasser und gegebenenfalls organische Lösungsmitteln | Rest |

Konzentrationbereiche der Anwendungsemulsionen liegen beispielsweise bei:

| **Bestandteil** | **Konzentrationen** |
|---|---|
| Polyamino- und/oder Poly-ammonium-Polysiloxan-Copolymer-Verbindungen | 1 bis 10 Gew.-% |
| Emulgatoren | 0,05 bis 5 Gew.-% |
| Wasser und gegebenenfalls organische Lösungsmitteln | Rest |

Anwendbare oberflächenaktive Substanzen schließen ein:

Bevorzugt silikonfreie, bevorzugt kationische oder nichtionische Tenside. Die Anwendung anionischer Tenside ist prinzipiell möglich, jedoch weniger bevorzugt. Bei den bevorzugten kationischen Tensiden handelt es sich um mindestens einen Bestandteil, der aus nicht-polymerisierten, organischen, quaternären Ammonium-Verbindungen ausgewählt wird. Bevorzugt handelt es sich um kohlenwasserstoffgruppenhaltige quaternäre Ammoniumsalzen oder Aminsalze, wobei die Kohlenwasserstoffgruppen bevorzugt 8 bis 28 Kohlenstoffatome enthalten können. Beispiele nichtionischer Tenside schließen ein: alkoxylierte Alkohole, Ethylenoxid (EO)-Propylenoxid (PO)-Blockpolymere, Polyhydroxyfettsäureamide, Alkylpolysaccharide und dergleichen.

Bei den nicht-wässrigen Trägersubstanzen, die zusätzlich zu Wasser in den Emulsionen vorhanden sein können handelt es sich beispielsweise um organische Lösungsmittel, bevorzugt wasserlösliche organische Lösungsmittel allein und/oder Mischungen davon auch mit Wasser. Bevorzugte organische Lösungsmittel schließen ein: Monoalkohole, Diole, Polyole, wie Glycerin, Glykol, Polyether, wie Polyalkylenglykole, wie Polyethylenglykole und Mischungen davon, auch mit Wasser. Besonders bevorzugt sind Mischungen von Lösungsmitteln, insbesondere Mischungen von niederen aliphatischen Alkoholen, wie Ethanol, Propanol, Butanol, Isopropanol, und/oder Diole, wie 1,2-Propandiol oder 1,3-Propandiol; oder Mischungen davon mit Glycerin. Geeignete Alkohole schließen insbesondere C₁-C₄-Alkohole ein. Bevorzugt ist 1,2-Propandiol und Wasser.
Die wässrigen Emulsions-Formulierungen können auch noch weitere Hilfsmittel in den für diese Hilfsmittel üblichen Mengen enthalten. Übliche Hilfsmittel im Sinne der Erfindung sind u.a. Egalisiermittel, Netzmittel, Glanzausrüstungsmittel, Faserschutzmittel, Schiebefestmittel und weitere Hilfsmittel nach Stand der Technik sein. Eine gute Übersicht der erfindungsgemäßen Hilfsmittel findet sich in Chwala/Anger, Handbuch der Textilhilfsmittel, Verlag Chemie, Weinhein 1977. Darüber hinaus können Puffersysteme zur Einstellung eines optimalen pH-Wertes während der Ausrüstung eingearbeitet werden.

Die Erfindung betrifft des weiteren die erfindungsgemäße Verwendung von Zusammensetzungen enthaltend mindestens eine Polyamino- und/oder Polyammonium-Polysiloxan-Copolymer-Verbindungen mit mindestens einer weiteren davon verschiedenen Polydiorganosiloxan-Verbindung. Als von den Polyamino- und/oder Polyammo-nium-Polysiloxan-Copolymer-Verbindungen verschiedene Polydiorganosiloxan-Verbindungen kommen insbesondere solche Verbindungen in Betracht, die keine Amino- und Ammoniumfunktionen tragen, wie PDMS-Öle.

Ein Verfahren zur Erstausrüstung von Fasermaterialien, welches die Behandlung der Fasermaterialien mit mindestens einer Polyamino- und/oder Polyammonium-Polysiloxan-Copolymer-Verbindung, wie vorstehend definiert oder einer Zusammensetzung wie vorstehend definiert, oder einer wässrigen Emulsion davon umfasst, wird beschrieben. Das Ausrüstungs-Verfahren kann insbesondere nach dem Kontinue-Verfahren (Foulard- oder Lisseuse- Verfahren) oder nach dem Ausziehverfahren (Jet-Verfahren) durchgeführt werden. Beispiele für bei diesen Ausrüstungsverfahrenen einzuhaltenden technologischen Parameter schließen ein:
• **Kontinue (z.B. Foulard, Lisseuse)**

| | |
|---|---|
| Ausrüstungstemperatur: | Raumtemperatur |
| Trocknungstemperatur: | 75-105 °C im Umlufttrockenschrank oder 10-60 sec auf dem Spannrahmen bei 150 °C, besonders 30-45 sec |
| Zeit im Umlufttrockenschrank: | 10-20 Minuten |

• **Ausziehverfahren (z.B. Jet, Haspelkufe)**

| | |
|---|---|
| Ausrüstungstemperatur: | 30-60 °C, bevorzugt 35-50 °C und speziell 35-45 °C |
| Aufheizrate: | 2-4 °C/Minute |
| Ausrüstungszeit: | 15-25 Minuten |
| Flottenverhältnis: | 1:5 bis 1:50, besonders 1:10 bis 1:30 |
| Trocknungstemperatur | 75-105 °C im Umlufttrockenschrank oder 10-60 sec auf dem Spannrahmen bei 150 °C, besonders 30-45 sec |
| Zeit im Umlufttrockenschrank: | 10-20 Minuten |

Die erfindungsgemäßen verwendeten Polyamino- und/oder Polyammonium-Polysiloxan-Copolymer-Verbindungen oder deren Zusammensetzungen oder deren wässrige Emulsionen eignen sich hervorragend als Textilweichmacher bei der Ausrüstung von textilen Flächengebilden, insbesondere solchen aus Baumwolle oder Mischungen von Baumwolle mit Polyester, Polyamid, Polyacrylnitril, Wolle und Seide. Unter textilen Flächengebilden sind bevorzugt Gewebe, Gewirke, Maschenware und Vliese zu verstehen. Als besonders vorteilhaft hat sich die Verwendung für die Ausrüstung von Baumwolle oder baumwollhaltigen Textilien, die mit anionischen Weißtönern vorbehandelt wurden, nach dem Jet-Verfahren erwiesen.

Die Erfindung betrifft weiterhin die Verwendung der erfindungsgemäßen Verbindungen zur Erstausrüstung und Behandlung von Textilien und anderen natürlichen und synthetischen faserartigen Materialien, einschließlich Papier, Haaren und Wolle.

Die Erfindung und die mit ihr erzielten Wirkungen werden durch die folgenden Beispiele veranschaulicht.

### BEISPIELE

### Beispiel 1

### Synthese eines Chloressigsäureesters

In Analogie zu Beispiel 11 der WO 02/10257 wird aus HOCH₂CH₂OCH₂CH₂OH durch Umsetzung mit Chloressigsäurechlorid der folgende Ester gewonnen:

ClCH₂C(O)O[CH₂CH₂O]₂C(O)CH₂Cl

### Beispiel 2

### Synthese eines langkettig Me₂SiO-basierten Blockcopolymeren (nicht erfindungs gemäß)

In einem 21 Dreihalskolben werden
800 g (0,1566 mol) eines Siloxanepoxides der Struktur 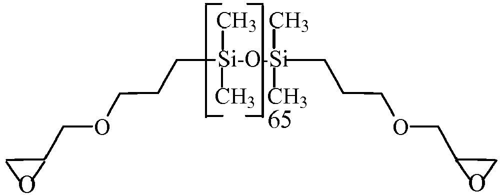 4,5 g (0,0174 mol) des Esters ClCH₂C(O)O[CH₂CH₂O]₂C(O)CH₂Cl, 30 g (0,174 mol) (CH₃)₂N(CH₂)₆N(CH₃)₂,
62,7 g (03132 mol) Dodecansäure
24,9 g deionisiertes Wasser und
74,8 g Dipropylenglykolmonomethylether
miteinander gemischt und für 9 Stunden auf 100 °C erhitzt.
Es wird eine viskose, klare, braune Polymerlösung erhalten.

### Beispiel 3

### Synthese eines kurzkettig D basierten Blockcopolymeren (erfindungsgemäß) In einem 21 Dreihalskolben werden

1000 g (0,297mol) eines Siloxanepoxides der Struktur 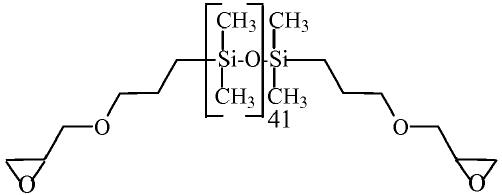 8,5 g (0,033 mol) des Esters ClCH₂C(O)O[CH₂CH₂O]₂C(O)CH₂Cl, 56,8 g (0,329 mol) (CH₃)₂N(CH₂)₆N(CH₃)₂,
118,8 g (0,593 mol) Dodecansäure
39,5 g deionisiertes Wasser und
92,1 g Dipropylenglykol
miteinander gemischt und für 9 Stunden auf 100 °C erhitzt.
Es wird eine viskose, ganz leicht trübe, braune Polymerlösung erhalten.

Die Polymeren verfügen über die folgenden Strukturelemente 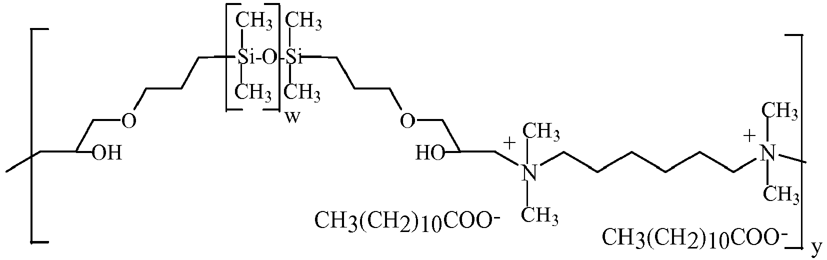 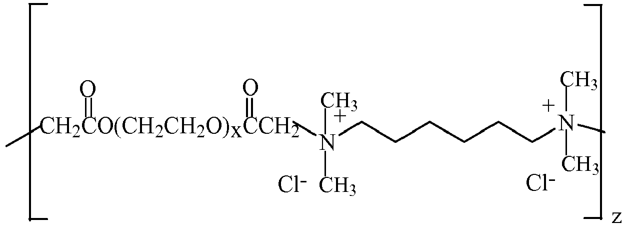 mit

| **Beispiel** | **w** | **x** | **y** | **z** |
|---|---|---|---|---|
| 2 | 65 | 2 | 0,9 | 0,1 |
| 3 | 41 | 2 | 0,9 | 0,1 |

### Beispiel 4

Herstellung von Microemulsionen, Textilausrüstung, Waschversuche
Die Polymeren gemäß Beispielen 2 und 3 werden in 20 %-ig siliconaktive Microemulsionen der folgenden Zusammensetzung überführt:
22,2 % Polymer gemäß Beispiel 2
3,8 % Emulgator Imbentin T 060
2,2 % Emulgator Imbentin T 120
71,8 % Wasser
   und
22,2 % Polymer gemäß Beispiel 3
4,2 % Emulgator Imbentin T 060
8,8 % Emulgator Imbentin T 120
64,8 % Wasser

Die Microemulsionen der Polymeren 2 und 3 werden auf 2 % verdünnt.
Anschließend wird Baumwoll-Frottee bei 40 °C für 30 Minuten mit den Microemulsionen im Auszugsverfahren ausgrüstet. Die Polymereinsatzmenge beträgt 2 mg Blockcopolymer/1 g Baumwoll-Frottee und 10 mg Blockcopolymer/1 g Baumwoll-Frottee. Anschließend werden die ausgerüsteten Frotteelappen bei 130 °C für 10 Minuten getrocknet und in zwei Teile geteilt. Vom ersten Teil der Frotteelappen wird nach 1 Tag Lagerung bei 40 % Luftfeuchtigkeit der Erstgriff und die Hydrophilie bestimmt. Die Bestimmung der Hydrophilie wird nach 7 Tagen wiederholt.
Der zweite Teil der Frotteelappen wird 3 Waschzyklen in Gegenwart eines auf anionischen Tensiden beruhenden Referenzwaschmittels unterworfen (40 °C, 30 Minuten, 0,1 g/l wfk-Ecolabel Reference Detergent Light Duty (wfk-Institut für Angewandte Forschung GmbH Fichtenhain 11 D-47807 Krefeld), nach jeder Wäsche 5 Minuten mit Leitungswasser spülen) und anschließend 1 Tag bei 40 % Luftfeuchtigkeit gelagert. Auch von den Frotteelappen nach 3 Waschzyklen wir der Griff und die Hydrophilie bestimmt.
Es wurden folgende Ergebnisse erzielt:

| **2 mg Blockcopolymer/1 g Baumwoll-Frottee** | | | | | |
|---|---|---|---|---|---|
| Microemuls. von Beispiel | Griff nach Ausrüstung* | Hydrophilie nach Ausrüstung (s)** | | Griff nach 3 Wäschen* | Hydrophilie nach 3 Wäschen (s)** |
| | | 1 Tag | 7 Tage | | 1 Tag |
| 3 | 1,75 | 2 | 4 | 1,53 | 1 |
| 2 | 1,25 | 2 | 5 | 1,47 | 1 |
| | | | | | |

| **10mg Blockcopolymer/1g Baumwoll-Frottee** | | | | | |
|---|---|---|---|---|---|
| Microemuls. von Beispiel | Griff nach Ausrüstung* | Hydrophilie nach Ausrüstung (s)** | | Griff nach 3 Wäschen* | Hydrophilie nach 3 Wäschen (s)** |
| | | 1 Tag | 7 Tage | | 1 Tag |
| 3 | 1,54 | 3 | 5 | 1,65 | 3 |
| 2 | 1,46 | 3 | 15 | 1,35 | 3 |

| | | | | | |
|---|---|---|---|---|---|
| *Der Griff wird 'Head to Head' ermittelt. Der bessere Lappen erhält 2 Punkte der schlechtere Lappen 1 Punkt. Es werden die Ergebnisse von 5 Versuchslappen, bewertet von 4 Personen, gemittelt. **Auf einen ausgerüsteten Frotteelappen werden 10 Wassertropfen (50 µl) aufgesetzt, die Zeiten bis zum Einsinken in Sekunden gemessen und der Mittelwert gebildet. | | | | | |

### Gesamtbewertung:

Die Daten zeigen, daß das erfindungsgemäße Blockcopolymer gemäß Beispiel 3 einen gegenüber dem nicht erfindungsgemäßen Blockcopolymer gemäß Beispiel 2 besseren Erstgriff bereits bei niedriger Konzentration (2 mg/g Texil) hat. Bei höheren Konzentrationen (10 mg/g Textil) kann das nicht erfindungsgemäße Blockcopolymer 2 hinsichtlich des Erstgriffs aufholen; allerdings verschlechtert sich unter diesen Bedingungen für Beispiel 2 die Hydrophilie nach Ausrüstung signifikant.

## Patentansprüche

1. Verwendung von Polyamino-Polysiloxan-Copolymer-Verbindungen und/oder Polyammonium-Polysiloxan-Copolymer-Verbindungen, welche Einheiten der Formel (I) aufweisen:
-[Q-V]- (I)
worin Q aus der Gruppe ausgewählt wird, die besteht aus:
-NR-,
-N⁺R₂-
einem gesättigten oder ungesättigten diaminofunktionellen Heterocyclus der Formeln: 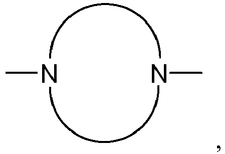 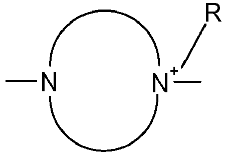 und 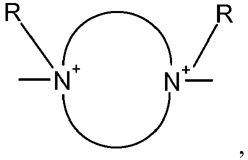 sowie einem aromatischen diaminofunktionellen Heterocyclus der Formel: 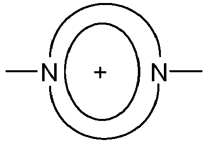 einem dreiwertigen Rest der Formel: 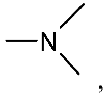 einem dreiwertigen Rest der Formel: 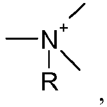 oder einem vierwertigen Rest der Formel, 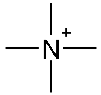
worin R jeweils Wasserstoff oder einen einwertigen organischen Rest darstellt,
wobei Q nicht an ein Carbonylkohlenstoffatom bindet,
V aus der Gruppe ausgewählt wird, die aus V¹¹, V¹², V² und V³ besteht, worin
V² ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen (wobei die Kohlenstoffatome des unten definierten Polysiloxanrestes Z² nicht mitgezählt werden), die gegebenenfalls eine oder mehrere Gruppen, ausgewählt aus
-O-,
-CONH-, 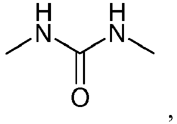 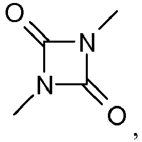
-CONR²-,
worin R² Wasserstoff, einen einwertigen, geradkettigen, cyclischen oder verzweigten, gesättigten, ungesättigten oder aromatischen Kohlenwasserstoffrest mit bis zu 100 Kohlenstoffatomen darstellt, der eine oder mehrere Gruppen ausgewählt aus
-O-,
-NH-,
-C(O)-
und
-C(S)-
enthalten kann, und der gegebenenfalls durch eine oder mehrere Substituenten, ausgewählt aus der Gruppe, die besteht aus:
einer Hydroxylgruppe,
einer gegebenenfalls substituierten, bevorzugt ein oder mehrere Stickstoffatome enthaltenden heterocyclischen Gruppe, Amino,
Alkylamino,
Dialkylamino,
Ammonium,
Polyetherresten und
Polyetheresterresten substituiert sein kann,
wobei, wenn mehrere Gruppen -CONR² vorliegen, diese gleich oder verschieden sein können,
-C(O)-
und
-C(S)-
enthalten kann, und der Rest V² gegebenenfalls durch eine oder mehrere Hydroxylgruppen und/oder durch
-Si(OR)₃₋ₐ(R')ₐ
substituiert sein kann, worin a eine ganze Zahl von 0 bis 2 ist und R und R' gleich oder verschieden voneinander sein können und jeweils einen organischen Rest darstellen, und
der Rest V² mindestens eine Gruppe -Z²- der Formel 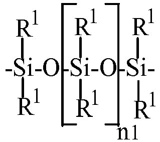 enthält, worin
R¹ gleich oder verschieden sein kann und aus der Gruppe ausgewählt wird, die besteht aus:
C₁ bis C₂₂-Alkyl,
Fluor(C₁-Cₗ₀)alkyl, C₆-C₁₀-Aryl und
-W-Si(OR)₃-(R')ₐ,
worin
R, R' und a wie oben definiert sind, und
Wist
-O- oder
ein zweiwertiger, geradkettiger, cyclischer oder verzweigter, gesättigter, ungesättigter oder aromatischer Kohlenwasserstoffrest mit bis zu 100 Kohlenstoffatomen, der eine oder mehrere Gruppen
-C(O) -,
-O-,
-NH-,
und
-S-
enthalten kann, und
gegebenenfalls durch Hydroxygruppen substituiert sein kann, und
n₁ = 20 bis 52 bedeutet,
V¹¹ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen, die gegebenenfalls eine oder mehrere Gruppen, ausgewählt aus
-O-,
-CONH-, 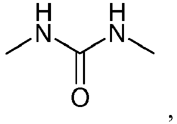 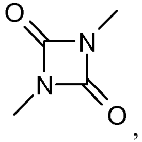
-CONR²-,
worin R² wie oben definiert ist, wobei die Gruppen R² in den Gruppen V¹¹ und V² gleich oder verschieden sein können,
-C(O)-,
-C(S)-
und
-Z¹-
enthalten können, worin
-Z¹- eine Gruppe der Formel 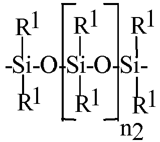 ist, worin
R¹ wie oben definiert ist, wobei die Gruppen R¹ in den Gruppen V¹¹ und V² gleich oder verschieden sein können, und
n₂ = 0 bis 19 bedeutet, und
der Rest V¹¹ gegebenenfalls durch eine oder mehrere Hydroxylgruppen und/oder durch
-Si(OR)₃₋ₐ(R')ₐ
substituiert sein kann, worin a eine ganze Zahl von 0 bis 2 ist und R und R' gleich oder verschieden voneinander sein können und jeweils einen organischen Rest darstellen,
mit der Maßgabe, dass der Rest V¹¹ (Poly)alkylenoxid-Einheiten aufweist,
V¹² ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen, die gegebenenfalls eine oder mehrere Gruppen, ausgewählt aus
-O-,
-CONH-, 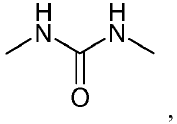 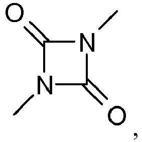
-CONR²-,
worin R² wie oben definiert ist, wobei die Gruppen R² in den Gruppen V¹² und V² gleich oder verschieden sein können,
-C(O)-,
-C(S)-
und
-Z¹-
enthalten können, worin
-Z¹- eine Gruppe der Formel 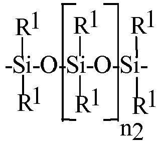 ist, worin
R¹ wie oben definiert ist, wobei die Gruppen R¹ in den Gruppen V¹² und V² gleich oder verschieden sein können, und
n₂ = 0 bis 19 bedeutet, und
der Rest V¹² gegebenenfalls durch eine oder mehrere Hydroxylgruppen und/oder durch
-Si(OR)₃₋ₐ(R')ₐ
substituiert sein kann, worin a eine ganze Zahl von 0 bis 2 ist und R und R' gleich oder verschieden voneinander sein können und jeweils einen organischen Rest darstellen,
mit der Maßgabe, dass der Rest V¹² keine (Poly)alkylenoxid-Einheiten aufweist,
und
V³ einen drei- oder höherwertigen, geradkettigen, cyclischen oder verzweigten, gesättigten, ungesättigten oder aromatischen Kohlenwasserstoffrest mit bis zu 1000 Kohlenstoffatomen darstellt, der gegebenenfalls eine oder mehrere Gruppen, ausgewählt aus
-O-,
-CONH-, 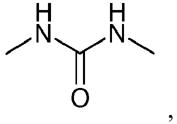 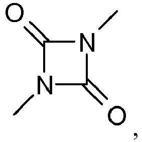
-CONR²-,
worin R² wie oben definiert ist,
-C(O)-,
-C(S)-,
-Z¹-,
das wie oben definiert ist,
-Z²- das wie oben definiert ist, und
Z³, worin Z³ eine drei- oder höherwertige Organopolysiloxaneinheit ist,
enthalten kann, und
der gegebenenfalls durch eine oder mehrere Hydroxylgruppen und/oder durch
-Si(OR)₃₋ₐ(R')ₐ
substituiert sein kann, worin a eine ganze Zahl von 0 bis 2 ist und R und R' gleich oder verschieden voneinander sein können und jeweils einen organischen Rest darstellen,
mit der Maßgabe,
- dass die Polyamino- und/oder Polyammonium-Polysiloxan-Copolymer-Verbindungen mindestens einen Rest V¹¹ und mindestens einen Rest V¹² enthalten,
- dass die genannte Polyamino- und/oder Polyammonium-Polysiloxan-Copolymer-Verbindungen mindestens eine Gruppe -Z¹⁻, -Z²- oder Z³ enthalten,
- V Wiederholungseinheiten der Formel V¹¹, V¹² und V² umfasst, und
- dass die drei- und vierwertigen Reste Q entweder der Verzweigung der aus Q und V gebildeten Hauptkette dienen, so dass die Valenzen, die nicht der Bindung in der Hauptkette dienen, weitere aus -[Q-V]-Einheiten gebildete Verzweigungen tragen, oder die drei- und vierwertigen Reste Q sättigen sich mit Resten V³ innerhalb einer linearen Hauptkette ohne Bildung einer Verzweigung ab, und
und worin die aus Ammoniumgruppen resultierenden positiven Ladungen durch organische oder anorganische Säureanionen neutralisiert sind,
zur Erstausrüstung von Fasermaterialien.

2. Verwendung nach Anspruch 1, worin die Polyamino-Polysiloxan-Copolymer-Verbindungen und/oder Polyammonium-Polysiloxan-Copolymer-Verbindungen die Formel (II) aufweisen: 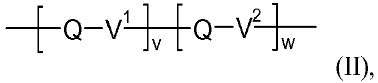
worin Q und V² wie zuvor definiert sind,
V¹ ausgewählt wird aus mindestens einer Gruppe V¹¹ und mindestens einer Gruppe V¹², und das Verhältnis von w zu v von 0,05 bis 10 beträgt.

3. Verwendung nach einem der Ansprüche 1 bis 2, worin die Polyamino-Polysiloxan-Copolymer-Verbindungen und/oder Polyammonium-Polysiloxan-Copolymer-Verbindungen die Formel (III) aufweisen: 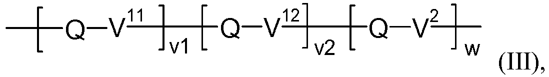 worin Q, V¹¹, V¹² und V² wie oben definiert sind, und v1 + v2 = v ist.

4. Verwendung nach Anspruch 3, worin das molare Verhältnis von v1 zu v2 in mol-% zwischen 0 und 100 liegt.

5. Verwendung nach einem der Ansprüche 3 bis 4, worin das molare Verhältnis von w zu v1 in mol-% von 80 bis 99 bezogen auf die Summe von w und v1 beträgt.

6. Verwendung nach einem der Ansprüche 1 bis 5, **dadurch gekennzeichnet, dass** Polyamino-Polysiloxan-Copolymer-Verbindungen und/oder Polyammonium-Polysiloxan-Copolymer-Verbindungen im Mittel mindestens zwei Wiederholungseinheiten der Formel (I) aufweisen.

7. Verwendung der Polyamino-Polysiloxan-Copolymer-Verbindungen und/oder Polyammonium-Polysiloxan-Copolymer-Verbindungen nach einem der Ansprüche 1 bis 6, **dadurch gekennzeichnet, daß** die Gruppe V² eine Gruppe der Formel
-V²*-Z²-V²*-
ist, worin Z² wie oben definiert ist und V²* einen zweiwertigen geradkettigen, cyclischen oder verzweigten, gesättigten, ungesättigten oder aromatischen Kohlenwasserstoffrest mit bis zu 40 Kohlenstoffatomen darstellt, der gegebenenfalls eine oder mehrere Gruppen, ausgewählt aus -O-, -CONH-, -CONR²-, worin R² wie oben definiert ist, -C(O)- und -C(S)-enthalten kann, und der Rest V²* gegebenenfalls durch eine oder mehrere Hydroxylgruppen substituiert sein kann.

8. Verwendung der Polyamino-Polysiloxan-Copolymer-Verbindungen und/oder Polyammonium-Polysiloxan-Copolymer-Verbindungen nach einem der Ansprüche 1 bis 7, **dadurch gekennzeichnet, dass** V¹² ausgewählt wird aus zweiwertigen, geradkettigen, cyclischen oder verzweigten, gesättigten, ungesättigten oder aromatischen Kohlenwasserstoffresten mit bis zu 100 Kohlenstoffatomen, die gegebenenfalls eine oder mehrere Gruppen, ausgewählt aus
-Z¹- enthalten können, worin
-Z¹- eine Gruppe der Formel 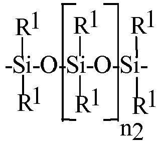 ist, worin
R¹ wie oben definiert ist, wobei die Gruppen R¹ in den Gruppen V¹² und V² gleich oder verschieden sein können, und
n₂ = 0 bis 19 bedeutet, und
der Rest V¹² gegebenenfalls durch eine oder mehrere Hydroxylgruppen und/oder durch
-Si(OR)₃₋ₐ(R')ₐ
substituiert sein kann, worin a eine ganze Zahl von 0 bis 2 ist und R und R' gleich oder verschieden voneinander sein können und jeweils einen organischen Rest darstellen.

9. Verwendung der Polyamino-Polysiloxan-Copolymer-Verbindungen und/oder Polyammonium-Polysiloxan-Copolymer-Verbindungen nach einem der Ansprüche 1 bis 8, **dadurch gekennzeichnet, daß** die Gruppe V¹² ein Rest - R⁹- ist, worin R⁹ einen zweiwertigen, gesättigten oder einfach oder mehrfach ungesättigten, geradkettigen oder verzweigten Kohlenwasserstoffrest mit zwei bis 25 Kohlenstoffatomen darstellt.

10. Verwendung der Polyamino-Polysiloxan-Copolymer-Verbindungen und/oder Polyammonium-Polysiloxan-Copolymer-Verbindungen nach einem der Ansprüche 1 bis 9, **dadurch gekennzeichnet, daß** die Gruppe V¹¹ ausgewählt wird aus
▪
-(CH₂)ᵤC(O)O-[(CH₂CH₂O)_{q}-(CH₂CH(CH₃)O)ᵣ]-C(O)(CH₂)ᵤ-
▪
-(CH₂)ᵤC(O)O-R⁹⁻O-C(O)(CH₂)ᵤ-,
worin R⁹ wie zuvor definiert ist,
▪
-[CH₂CH₂O]_{q}-[CH₂CH(CH₃)O]ᵣ-CH₂CH₂-,
▪
-CH(CH₃)CH₂O[CH₂CH₂O]_{q}-[CH₂CH(CH₃)O]ᵣ-CH₂CH(CH₃)-
▪
-CH₂CH(OH)CH₂OCH₂CH(OH)CH₂OCH₂CH(OH)CH₂- und
▪
-CH₂CH(OH)CH₂O-[CH₂CH₂O]_{q}-[CH₂CH(CH₃)ᵣ-CH₂CH(OH)CH₂-
worin
u von 1 bis 3 ist,
q und r von 0 bis 5, bevorzugt von 0 bis 3, und
q + r > 0 ist.

11. Verwendung der Polyamino-Polysiloxan-Copolymer-Verbindung und/oder Polyammonium-Polysiloxan-Copolymer-Verbindungen nach einem der Ansprüche 1 bis 10, **dadurch gekennzeichnet, daß** die Gruppe V¹¹ ausgewählt wird aus
-(CH₂)C(O)O-[(CH₂CH₂O)_{q]}-C(O)(CH₂)-
worin q =1 oder 2 ist.

12. Verwendung der Polyamino-Polysiloxan-Copolymer-Verbindungen und/oder Polyammonium-Polysiloxan-Copolymer-Verbindungen nach einem der Ansprüche 1 bis 11, worin die Fasermaterialien ausgewählt werden aus natürlichen und synthetischen faserartigen Materialien, einschließlich Cellulose, Wolle, Baumwolle, Seide und Synthesefasern.

13. Verwendung von Zusammensetzungen enthaltend mindestens eine Polyamino-Polysiloxan-Copolymer-Verbindung und/oder Polyammonium-Polysiloxan-Copolymer-Verbindung wie in einem der Ansprüche 1 bis 11 definiert, in Kombination mit mindestens einer weiteren davon verschiedenen Polydiorganosiloxan-Verbindung.

14. Verwendung einer wässrigen Emulsion, enthaltend mindestens eine Polyamino- und/oder Polyammonium-Polysiloxan-Copolymer-Verbindungen, wie in einem der Ansprüche 1 bis 11 definiert, sowie gegebenenfalls ein oder mehrere Tenside sowie gegebenenfalls ein oder mehrere stickstofffreie Polysiloxanverbindungen zur Erstausrüstung von Fasermaterialien.

## Claims

1. Use of polyamino-polysiloxane-copolymer compounds and/or polyammonium-polysiloxane-copolymer compounds comprising units of the formula (I):
-[Q-V]- (I)
wherein Q is selected from the group consisting of:
-NR-,
-N⁺R₂-
a saturated or unsaturated diamino-functional heterocycle of the formulae: 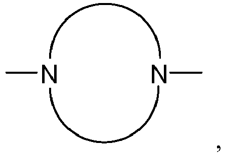 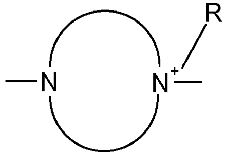 and 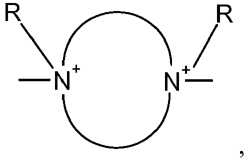 as well as an aromatic diamino-functional heterocycle of the formula: 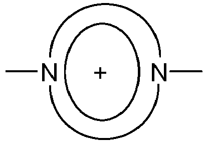 a trivalent residue of the formula: 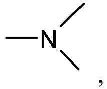 a trivalent residue of the formula: 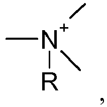 or
a tetravalent residue of the formula: 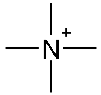
wherein R respectively represents hydrogen or a monovalent organic residue,
wherein Q does not bond to a carbonyl carbon atom,
V is selected from the group consisting of V¹¹ , V¹² , V² and V³, wherein
V² is selected from divalent, straight-chained, cyclic or branched, saturated, unsaturated or aromatic hydrocarbon residues with up to 1000 carbon atoms (wherein the carbon atoms of the polysiloxane residue Z² defined below are not included in this number), which may optionally contain one or more groups selected from
-O-,
-CONH-, 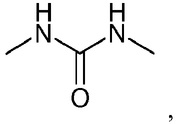 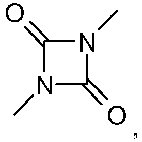
-CONR²-,
wherein
R² represents hydrogen, a monovalent, straight-chained, cyclic or branched, saturated, unsaturated or aromatic hydrocarbon residue with up to 100 carbon atoms, which may contain one or more groups selected from
-O-,
-NH-,
-C(O)-
and
-C(S)-,
and which may optionally be substituted by one or more substituents selected from the group consisting of:
a hydroxyl group,
an optionally substituted heterocyclic group preferably containing one or more nitrogen atoms,
amino,
alkylamino,
dialkylamino,
ammonium,
polyether residues and
polyether ester residues,
wherein, if several groups -CONR² are present, they may be the same or different,
-C(O)-
and
-C(S)-,
and
the residue V² may optionally be substituted by one or more hydroxyl groups and/or by
-Si(OR)₃₋ₐ(R')ₐ
wherein a is an integer from 0 to 2, and R and R' may be the same or different from each other, and each represent an organic residue, and
the residue V² contains at least one group -Z²- of the formula 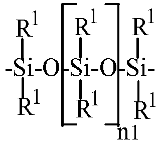
wherein
R¹ may be the same or different and is selected from the group consisting of:
C₁ to C₂₂-alkyl,
fluoro(C₁-C₁₀)alkyl, C₆-C₁₀-aryl and
-W-Si(OR)₃₋ₐ(R')_{a,} wherein
R, R' and a are defined as above, and
W is
-O-
or a divalent, straight-chained or cyclic or branched, saturated, unsaturated or aromatic hydrocarbon residue with up to 100 carbon atoms, which may contain one or more groups
-C(O) -,
-O-,
-NH-,
and
-S-
and may optionally be substituted by hydroxyl groups, and
n₁ = 20 to 52,
V¹¹ is selected from divalent, straight-chained, cyclic or branched, saturated, unsaturated or aromatic hydrocarbon residues with up to 1000 carbon atoms, which may optionally contain one or more groups selected from
-O-,
-CONH-, 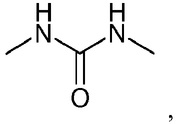 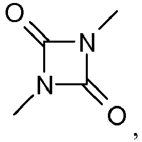
-CONR²⁻,
wherein
R² is as defined above, wherein the groups R² in the groups
V¹¹ and V² may be the same or different,
-C(O)-,
-C(S)- and
-Z¹-,
wherein -Z¹- is a group of the formula 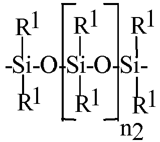
wherein
R¹ is as defined above, wherein the groups R¹ in the groups V¹¹ and V² may be the same or different, and
n₂ = 0 to 19, and
the residue V¹¹ may optionally be substituted by one or more hydroxyl groups and/or by
-Si(OR)₃₋ₐ(R')ₐ
wherein a is an integer from 0 to 2, and R and R' may be the same or different from each other, and each represent an organic residue,
provided that the residue V¹¹ comprises (poly)alkyleneoxide units,
V¹² is selected from divalent, straight-chained, cyclic or branched, saturated, unsaturated or aromatic hydrocarbon residues with up to 1000 carbon atoms, which may optionally contain one or more groups selected from
-O-,
-CONH-, 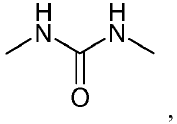 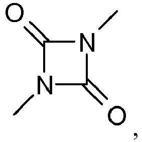
-CONH²-, wherein
R² is as defined above, wherein the groups R² in the groups
V¹² and V² may be the same or different,
-C(O)-,
-C(S)-
and
-Z¹-, wherein
-Z¹- is a group of the formula 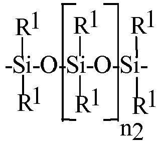 wherein
R¹ is as defined above, wherein the groups R¹ in the groups V¹² and V² may be the same or different, and
n₂ = 0 to 19, and
the residue V¹² may optionally be substituted by one or more hydroxyl groups and/or by
-Si(OR)₃₋ₐ(R')ₐ
wherein a is an integer from 0 to 2, and R and R' may be the same or different from each other, and each represent an organic residue,
provided that the residue V¹² comprises no (poly)alkyleneoxide units,
and
V³ represents a tri- or higher-valent, straight-chained, cyclic or branched, saturated, unsaturated or aromatic hydrocarbon residue with up to 1000 carbon atoms, which may optionally contain one or more groups selected from
-O-,
-CONH-, 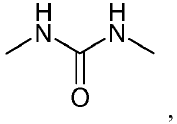 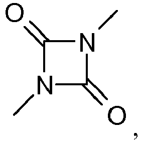
-CONH²-, wherein R² is as defined above,
-C(O)-,
-C(S)-,
-Z¹-, which is as defined above,
-Z²- which is as defined above, and
Z³, wherein Z³ is a tri- or higher-valent organopolysiloxane unit, and
which may optionally be substituted by one or more hydroxyl groups and/or by
-Si(OR)₃₋ₐ(R')ₐ
wherein a is an integer from 0 to 2, and R and R' may be the same or different from each other, and each represent an organic residue,
provided that
- the polyamino- and/or polyammonium-polysiloxane-copolymer compounds contain at least one residue V¹¹ and at least one residue V¹²,
- the above-mentioned polyamino- and/or polyammonium-polysiloxane-copolymer compounds contain at least one group -Z¹-, -Z²- or Z³,
- V comprises repeating units of the formula V¹¹, V¹² and V², and
- that the tri- and tetravalent residues Q either serve for branching the main chain formed from Q and V, so that the valences which do not serve for bonding in the main chain carry further branchings formed from -[Q-V]- units, or the tri- and tetravalent residues Q are saturated with residues V³ within a linear main chain without forming a branching, and
wherein the positive charges resulting from ammonium groups are neutralized by organic or inorganic acid anions,
for the first finishing of fiber materials.

2. Use according to claim 1, wherein the polyamino-polysiloxane-copolymer compounds and/or polyammonium-polysiloxane-copolymer compounds comprise the formula (II): 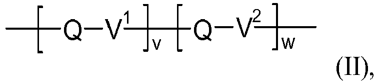
wherein Q and V² are defined as above,
V¹ is selected from at least one group V¹¹ and at least one group V¹², and the ratio of w to v is from 0.05 to 10.

3. Use according to the claims 1 to 2, wherein the polyamino-polysiloxane-copolymer compounds and/or polyammonium-polysiloxane-copolymer compounds comprise the formula (III): 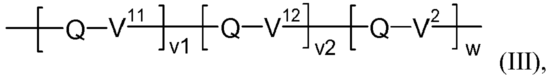 wherein Q, V¹¹, V¹² and V² are defined as above, and v1 + v2 = v.

4. Use according to claim 3, wherein the molar ratio of v1 to v2 in mol-% is between 0 to 100.

5. Use according to any one of the claims 3 to 4, wherein the molar ratio of w to v1 in mol-% is from 80 to 99, relative to the sum of w and v1.

6. Use according to any one of the claims 1 to 5, **characterized in that** the polyamino polysiloxane-copolymer compounds and/or polyammonium-polysiloxane-copolymer compounds, on average, comprise at least two repeating units of the formula (I).

7. Use of the polyamino-polysiloxane-copolymer compounds and/or polyammonium-polysiloxane-copolymer compounds according to any one of the claims 1 to 6, **characterized in that** the group V² is a group of the formula
-V²*-Z²-V²*-
wherein Z² is as defined above and V^{2*} represents a divalent, straight-chained, cyclic or branched, saturated, unsaturated or aromatic hydrocarbon residue with up to 40 carbon atoms, which may optionally contain one or more groups selected from
-O-, -CONH-, wherein R² is as defined above, -C(O)- and -C(S)-, and the residue V^{2*} may optionally be substituted by one or more hydroxyl groups.

8. Use of the polyamino-polysiloxane-copolymer compounds and/or polyammonium-polysiloxane-copolymer compounds according to any one of the claims 1 to 7, **characterized in that** V¹² is selected from divalent, straight-chained, cyclic or branched, saturated, unsaturated or aromatic hydrocarbon residues with up to 100 carbon atoms, which may optionally contain one or more groups selected from
-Z¹-, wherein -Z¹- is a group of the formula 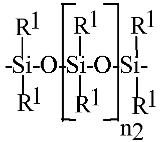 wherein
R¹ is as defined above, wherein the groups R¹ in the groups V¹² and V² may be the same or different, and
n₂ = 0 to 19, and
the residue V¹² may optionally be substituted by one or more hydroxyl groups and/or by
-Si(OR)₃₋ₐ(R')ₐ
wherein a is an integer from 0 to 2, and R and R' may be the same or different from each other, and each represent an organic residue.

9. Use of the polyamino-polysiloxane-copolymer compounds and/or polyammonium-polysiloxane-copolymer compounds according to any one of the claims 1 to 8, **characterized in that** the group V¹² is a residue -R⁹-, wherein R⁹ represents a divalent, saturated or mono- or polyunsaturated, straight-chained or branched hydrocarbon residue with two to 25 carbon atoms.

10. Use of the polyamino-polysiloxane-copolymer compounds and/or polyammonium-polysiloxane-copolymer compounds according to any one of the claims 1 to 9, **characterized in that** the group V¹¹ is selected from
▪
-(CH₂)ᵤC(O)O-[(CH₂CH₂O)_{q}-(CH₂CH(CH₃)O)ᵣ]-C(O)(CH₂)ᵤ-
▪ -(CH₂)ᵤC(O)O-R⁹-O-C(O)(CH₂)ᵤ-,
wherein R⁹ is as defined above,
▪
-[CH₂CH₂O]_{q}-[CH₂CH(CH₃)O]ᵣ-CH₂CH₂-,
▪
-CH(CH₃)CH₂O[CH₂CH₂O]_{q}-[CH₂CH(CH₃)O]ᵣ-CH₂CH(CH₃)-
▪
-CH₂CH(OH)CH₂OCH₂CH(OH)CH₂OCH₂CH(OH)CH₂- and
▪
-CH₂CH(OH)CH₂O-[CH₂CH₂O]_{q}-[CH₂CH(CH₃)O]ᵣ-CH₂CH(OH)CH₂-
wherein
u is 1 to 3,
q and r are 0 to 5, preferably 0 to 3, and
q + r > 0.

11. Use of the polyamino-polysiloxane-copolymer compounds and/or polyammonium-polysiloxane-copolymer compounds according to any one of the claims 1 to 10, **characterized in that** the group V¹¹ is selected from
-(CH₂)C(O)O-[(CH₂CH₂O)_{q}]-C(O)(CH₂)-
wherein q =1 or 2.

12. Use of the polyamino-polysiloxane-copolymer compounds and/or polyammonium-polysiloxane-copolymer compounds according to any one of the claims 1 to 11, wherein the fiber materials are selected from natural and synthetic fibrous materials including cellulose, wool, cotton, silk and synthetic fibers.

13. Use of compositions comprising at least one polyamino-polysiloxane-copolymer compound and/or polyammonium-polysiloxane-copolymer compound as defined in any one of the claims 1 to 11, in combination with at least one further polydiorganosiloxane compound different therefrom.

14. Use of an aqueous emulsion comprising at least one polyamino-polysiloxane-copolymer compound and/or polyammonium-polysiloxane-copolymer compound as defined in any one of the claims 1 to 11, as well as optionally one or more surfactants as well as optionally one or more nitrogen-free polysiloxane compounds for the first finishing of fiber materials.

## Revendications

1. Utilisation de composés à base de copolymères de polyamino-polysiloxane et/ou de composés à base de copolymères de polyammonium-polysiloxane comprenant des motifs de formule (I) :
-[Q-V]- (I)
où Q est choisi dans le groupe constitué par :
-NR-,
-N⁺R₂-
un hétérocycle à fonction diamino saturé ou insaturé de formules : 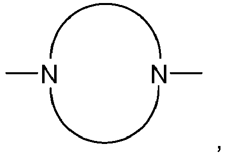 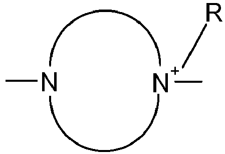 et 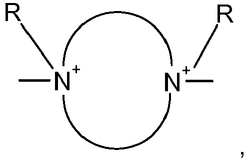 ainsi que
un hétérocycle à fonction diamino aromatique de formule : 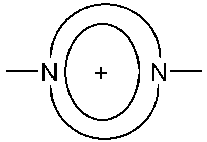 un résidu trivalent de formule : 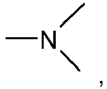 un résidu trivalent de formule : 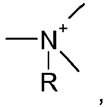 ou
un résidu tétravalent de formule : 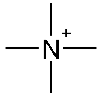
où R représente respectivement un atome d'hydrogène ou un résidu organique monovalent,
où Q ne se lie pas à un atome de carbone du carbonyle,
V est choisi dans le groupe constitué par V¹¹, V¹², V² et V³, où
V² est choisi parmi des résidus hydrocarbonés divalents, linéaires, cycliques ou ramifiés, saturés, insaturés ou aromatiques ayant jusqu'à 1000 atomes de carbone (où les atomes de carbone du résidu polysiloxane Z² défini ci-dessous ne sont pas compris dans ce nombre) qui peuvent facultativement contenir un ou plusieurs groupe(s) choisi(s) parmi
-O-,
-CONH-, 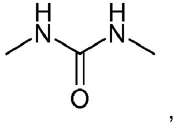 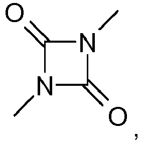
-CONH²-, où
R² représente un atome d'hydrogène, un résidu hydrocarboné monovalent, linéaire, cyclique ou ramifié, saturé, insaturé ou aromatique ayant jusqu'à 100 atomes de carbone, qui peut contenir un ou plusieurs groupe(s) choisi(s) parmi
-O-,
-NH-,
-C(O)- et
-C(S)-,
et qui peut facultativement être substitué par un ou plusieurs substituant(s) choisi(s) dans le groupe constitué par :
un groupe hydroxyle,
un groupe hétérocyclique facultativement substitué contenant de préférence un ou plusieurs atome(s) d'azote,
un amino,
un alkylamino,
un dialkylamino,
un ammonium,
des résidus polyéther et
des résidus polyéther-ester,
où, si plusieurs groupes -CONR² sont présents, ils peuvent être identiques ou différents,
-C(O)-
et
-C(S)-,
et le résidu V² peut facultativement être substitué par un ou plusieurs groupe(s) hydroxyle et/ou par
-Si(OR)₃₋ₐ(R')ₐ
où a est un nombre entier allant de 0 à 2 et R et R' peuvent être identiques ou différents et représentent chacun un résidu organique, et
le résidu V² contient au moins un groupe -Z²- de formule 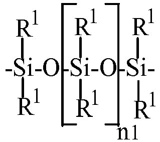 où
R¹ peut être identique ou différent et est choisi dans le groupe constitué par:
un alkyle en C₁ à C₂₂,
un fluoroalkyle en (C₁ à C₁₀), un aryle en C₆ à C₁₀ et -W-Si(OR)₃₋ₐ(R')ₐ, où
R, R' et a sont définis comme ci-dessus, et
W est
-O-
ou un résidu hydrocarboné divalent, linéaire, cyclique ou ramifié, saturé, insaturé ou aromatique ayant jusqu'à 100 atomes de carbone, qui peut contenir un ou plusieurs groupe(s)
-C(O)-,
-O-,
-NH-,
et
-S-
et peut facultativement être substitué par des groupes hydroxyle, et
n₁ = 20 à 52,
V¹¹ est choisi parmi des résidus hydrocarbonés divalents, linéaires, cycliques ou ramifiés, saturés, insaturés ou aromatiques ayant jusqu'à 1000 atomes de carbone, qui peuvent facultativement contenir un ou plusieurs groupe(s) choisi(s) parmi
-O-,
-CONH-, 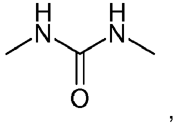 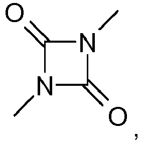
-CONH²-, où
R² est tel que défini ci-dessus, où les groupes R² dans les groupes V¹¹ et V² peuvent être identiques ou différents,
-C(O)-,
-C(S)-
et
-Z¹-, où
-Z¹- représente un groupe de formule 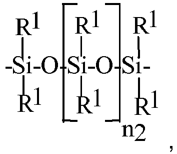 où
R¹ est tel que défini ci-dessus, où les groupes R¹ dans les groupes V¹¹ et V² peuvent être identiques ou différents, et
n₂ = 0 à 19, et
le résidu V¹¹ peut facultativement être substitué par un ou plusieurs groupe(s) hydroxyle et/ou par
-Si(OR)₃₋ₐ(R')ₐ
où a est un nombre entier allant de 0 à 2 et R et R' peuvent être identiques ou différents et représentent chacun un résidu organique,
à condition que le résidu V¹¹ comprenne des motifs (poly)oxyde d'alkylène,
V¹² est choisi parmi des résidus hydrocarbonés divalents, linéaires, cycliques ou ramifiés, saturés, insaturés ou aromatiques ayant jusqu'à 1000 atomes de carbone, qui peuvent facultativement contenir un ou plusieurs groupe(s) choisi(s) parmi
-O-,
-CONH-, 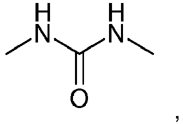 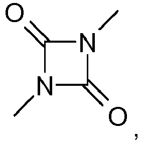
-CONH²-, où
R² est tel que défini ci-dessus, où les groupes R² dans les groupes V¹² et V² peuvent être identiques ou différents,
-CO)-,
-C(S)- et
-Z¹-,
où
-Z¹- est un groupe de formule 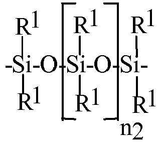 où
R¹ est tel que défini ci-dessus, où les groupes R¹ dans les groupes V¹² et V² peuvent être identiques ou différents, et
n₂ = 0 à 19, et
le résidu V¹² peut facultativement être substitué par un ou plusieurs groupe(s) hydroxyle et/ou par
-Si(OR)₃₋ₐ(R')ₐ
où a est un nombre entier allant de 0 à 2, et R et R' peuvent être identiques ou différents et représentent chacun un résidu organique,
à condition que le résidu V¹² ne comprenne pas de motifs (poly)oxyde d'alkylène,
et
V³ représente un résidu hydrocarboné trivalent ou de valence supérieure, linéaire, cyclique ou ramifié, saturé, insaturé ou aromatique ayant jusqu'à 1000 atomes de carbone, qui peut facultativement contenir un ou plusieurs groupe(s) choisi(s) parmi
-O-,
-CONH-, 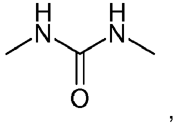 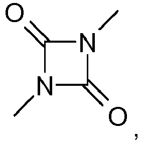
-CONH²-, où R² est tel que défini ci-dessus,
-C(O)-,
-C(S)-,
-Z¹-, qui est tel que défini ci-dessus,
-Z²-, qui est tel que défini ci-dessus, et
Z³, où Z³ est un motif organopolysiloxane trivalent ou de valence supérieure, et
qui peut facultativement être substitué par un ou plusieurs groupe(s) hydroxyle et/ou par
-Si(OR)₃₋ₐ(R')ₐ
où a est un nombre entier allant de 0 à 2, et R et R' peuvent être identiques ou différents et représentent chacun un résidu organique,
à condition que
- les composés à base de copolymères de polyamino- et/ou de polyammonium-polysiloxane contiennent au moins un résidu V¹¹ et au moins un résidu V¹²,
- les composés à base de copolymères de polyamino- et/ou de polyammonium-polysiloxane susmentionnés contiennent au moins un groupe - Z¹-, -Z²- ou Z³,
- V comprenne des motifs répétitifs de formule V¹¹, V¹² et V², et
- que les résidus tri- et tétravalents Q servent soit à ramifier la chaîne principale formée à partir de Q et V, de sorte que les valences qui ne servent pas à la liaison dans la chaîne principale portent des ramifications supplémentaires formées à partir des motifs -[Q-V]-, ou les résidus tri- et tétravalents Q soient saturés avec des résidus V³ dans une chaîne principale linéaire sans formation d'une ramification, et
où les charges positives résultant des groupes ammonium sont neutralisées par des anions d'acides organiques ou inorganiques,
pour le premier apprêt de matériaux fibreux.

2. Utilisation selon la revendication 1, dans laquelle les composés à base de copolymères de polyamino-polysiloxane et/ou les composés à base de copolymères de polyammonium-polysiloxane répondent à la formule (II) : 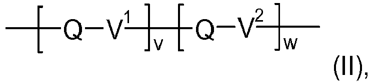
où Q et V² sont définis comme ci-dessus,
V¹ est choisi parmi au moins un groupe V¹¹ et au moins un groupe V¹², et le rapport de w sur v est de 0,05 à 10.

3. Utilisation selon les revendications 1 et 2, dans laquelle les composés à base de copolymères polyamino-polysiloxane et/ou les composés à base de copolymères polyammonium-polysiloxane répondent à la formule (III) : 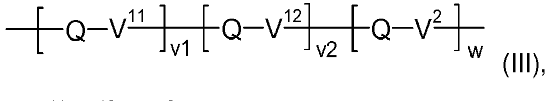 où Q, V¹¹, V¹² et V² sont définis comme ci-dessus, et v1 + v2 = v.

4. Utilisation selon la revendication 3, dans laquelle le rapport molaire de v1 sur v2 en % molaire est compris entre 0 et 100.

5. Utilisation selon l'une quelconque des revendications 3 et 4, dans laquelle le rapport molaire de w sur v1 en % molaire est de 80 à 99, par rapport à la somme de w et v1.

6. Utilisation selon l'une quelconque des revendications 1 à 5, **caractérisée en ce que** les composés à base de copolymères de polyamino-polysiloxane et/ou les composés à base de copolymères de polyammonium-polysiloxane comprennent, en moyenne, au moins deux motifs répétitifs de formule (I).

7. Utilisation des composés à base de copolymères de polyamino-polysiloxane et/ou des composés à base de copolymères de polyammonium-polysiloxane selon l'une quelconque des revendications 1 à 6, **caractérisée en ce que** le groupe V² est un groupe de formule
-V²*-Z²-V²*-
où Z² est tel que défini ci-dessus et V²* représente un résidu hydrocarboné divalent, linéaire, cyclique ou ramifié, saturé, insaturé ou aromatique ayant jusqu'à 40 atomes de carbone, qui peut facultativement contenir un ou plusieurs groupe(s) choisi(s) parmi -O-, -CONH-, où R² est tel que défini ci-dessus, -C(O)- et -C(S)-, et le résidu V²* peut facultativement être substitué par un ou plusieurs groupe(s) hydroxyle.

8. Utilisation des composés à base de copolymères de polyamino-polysiloxane et/ou des composés à base de copolymères de polyammonium-polysiloxane selon l'une quelconque des revendications 1 à 7, **caractérisée en ce que** V¹² est choisi parmi des résidus hydrocarbonés divalents, linéaires, cycliques ou ramifiés, saturés, insaturés ou aromatiques ayant jusqu'à 100 atomes de carbone, qui peuvent facultativement contenir un ou plusieurs groupe(s) choisi(s) parmi
-Z¹⁻, où
-Z¹- est un groupe de formule 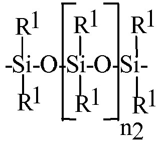 où
R¹ est tel que défini ci-dessus, où les groupes R¹ dans les groupes V¹² et V² peuvent être identiques ou différents, et
n2 = 0 à 19, et
le résidu V¹² peut facultativement être substitué par un ou plusieurs groupe(s) hydroxyle et/ou par
-Si(OR)₃₋ₐ(R')ₐ
où a est un nombre entier allant de 0 à 2, et R et R' peuvent être identiques ou différents et représentent chacun un résidu organique.

9. Utilisation des composés à base de copolymères de polyamino-polysiloxane et/ou des composés à base de copolymères de polyammonium-polysiloxane selon l'une quelconque des revendications 1 à 8, **caractérisée en ce que** le groupe V¹² est un résidu -R⁹-, où R⁹ représente un résidu hydrocarboné divalent, saturé ou mono- ou polyinsaturé, linéaire ou ramifié ayant deux à 25 atomes de carbone.

10. Utilisation des composés à base de copolymères de polyamino-polysiloxane et/ou des composés à base de copolymères de polyammonium-polysiloxane selon l'une quelconque des revendications 1 à 9, **caractérisée en ce que** le groupe V¹¹ est choisi parmi
▪
-(CH₂)ᵤC(O)O-[(CH₂CH₂O)_{q}-(CH₂CH(CH₃)O)ᵣ]-C(O)(CH₂)ᵤ-
▪
-(CH₂)ᵤC(O)O-R⁹-O-C(O)(CH₂)ᵤ-,
où R⁹ est tel que défini ci-dessus,
▪
-[CH₂CH₂O]_{q}-[CH₂CH(CH₃)O]ᵣ-CH₂CH₂-,
▪
-CH(CH₃)CH₂O[CH₂CH₂O]_{q}-[CH₂CH(CH₃)O]ᵣ-CH₂CH(CH₃)-
▪
-CH₂CH(OH)CH₂OCH₂CH(OH)CH₂OCH₂CH(OH)CH₂- et
▪
-CH₂CH(OH)CH₂O-[CH₂CH₂O]_{q}-[CH₂CH(CH₃)O]ᵣCH₂CH(OH)CH₂-
où
u est de 1 à 3,
q et r sont de 0 à 5, de préférence de 0 à 3, et
q + r > 0.

11. Utilisation des composés à base de copolymères de polyamino-polysiloxane et/ou des composés à base de copolymères de polyammonium-polysiloxane selon l'une quelconque des revendications 1 à 10, **caractérisée en ce que** le groupe V¹¹ est choisi parmi
-(CH₂)C(O)O-[(CH₂CH₂O)_{q}]-C(O)(CH₂)-
où q = 1 ou 2.

12. Utilisation des composés à base de copolymères de polyamino-polysiloxane et/ou des composés à base de copolymères de polyammonium-polysiloxane selon l'une quelconque des revendications 1 à 11, dans laquelle les matériaux fibreux sont choisis parmi des matériaux fibreux naturels et synthétiques comportant la cellulose, la laine, le coton, la soie et des fibres synthétiques.

13. Utilisation de compositions comprenant au moins un composé à base de copolymères de polyamino-polysiloxane et/ou un composé à base de copolymères de polyammonium-polysiloxane tel(s) que défini(s) dans l'une quelconque des revendications 1 à 11 en combinaison avec au moins un composé polydiorganosiloxane supplémentaire différent de ceux-ci.

14. Utilisation d'une émulsion aqueuse comprenant au moins un composé à base de copolymères de polyamino-polysiloxane et/ou un composé à base de copolymères de polyammonium-polysiloxane tel(s) que défini(s) dans l'une quelconque des revendications 1 à 11, ainsi que, facultativement, un ou plusieurs tensioactif(s) ainsi que, facultativement, un ou plusieurs composé(s) polysiloxane exempt(s) d'azote pour le premier apprêt de matériaux fibreux.
